(19) Europäisches Patentamt
European Patent Office
Office européen des brevets

(11) **EP 3 026 736 B1**

(12) **EUROPEAN PATENT SPECIFICATION**

(45) Date of publication and mention
of the grant of the patent:
**07.02.2018 Bulletin 2018/06**

(51) Int Cl.:
*H01M 4/38* *(2006.01)*    *C01B 33/029* *(2006.01)*
*C01B 33/03* *(2006.01)*    *C01B 33/035* *(2006.01)*
*H01M 10/0525* *(2010.01)*

(21) Application number: **15196830.2**

(22) Date of filing: **27.11.2015**

(54) **ANODE ACTIVE MATERIAL FOR LITHIUM SECONDARY BATTERY**

AKTIVES ANODENMATERIAL FÜR EINE LITHIUMSEKUNDÄRBATTERIE

MATIÈRE ACTIVE D'ANODE POUR BATTERIE SECONDAIRE AU LITHIUM

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.11.2014 KR 20140169201
28.11.2014 KR 20140169202
28.11.2014 KR 20140169203
28.11.2014 KR 20140169204**

(43) Date of publication of application:
**01.06.2016 Bulletin 2016/22**

(73) Proprietor: **Samsung Electronics Co., Ltd.
Gyeonggi-do 16677 (KR)**

(72) Inventors:
• **KIM, Sewon
16678 Gyeonggi-do (KR)**
• **MOON, Jongseok
16678 Gyeonggi-do (KR)**
• **SHIM, Kyueun
16678 Gyeonggi-do (KR)**
• **JO, Sungnim
16678 Gyeonggi-do (KR)**
• **YU, Taehwan
16678 Gyeonggi-do (KR)**

(74) Representative: **Scheuermann, Erik et al
Elkington and Fife LLP
Prospect House
8 Pembroke Road
Sevenoaks, Kent TN13 1XR (GB)**

(56) References cited:
**WO-A1-2015/005648    US-A1- 2005 233 213
US-A1- 2010 297 502**

**Description**

FIELD OF THE INVENTION

The present disclosure relates to an anode active material for a lithium secondary battery and a lithium secondary battery including the anode active material.

BACKGROUND OF THE INVENTION

Electronics, information, and communication industries have rapidly developed by manufacturing electronic devices which are portable, miniaturized, light-weighted, and converted to display high performance. As a result, demand for a lithium secondary battery having high capacity and high performance as a power source for the electronic devices has increased. Further, since electric vehicles (EV) or hybrid electric vehicles (HEV) have been put into practical use, research into the development of lithium secondary batteries having high capacity and output and excellent stability has been promoted.

A lithium secondary battery includes a material capable of intercalation and deintercalation of lithium ions as a cathode and an anode and is manufactured by filling a space between the anode and the cathode with an organic electrolyte solution or a polymer electrolyte solution. Due to the oxidation and reduction processes which occur when lithium ions intercalate or deintercalate from the cathode and the anode, electrical energy is generated from the cathode and anode.

Carbonaceous material has been used as an electrode active material that constitutes an anode of a lithium battery. Among examples of the carbonaceous material, graphite has a theoretical capacity of about 372 millampere-hour per gram (mAh/g), while the actual capacity of conventional graphite has a range of about 350 mAh/g to about 360 mAh/g. However, carbonaceous material such as graphite is limited in terms of increasing the capacity of a lithium secondary battery. Thus, there remains a need for improved lithium secondary battery materials.

WO 2015/005648 A1 discloses an anode active material for a lithium secondary battery using amorphous silicon first particles and silicon second particles (having agglomerated crystalline silicon first particles) as an anode active material.

US 2010/0297502 A1 discloses nanostructured materials (including nanowires) for use in batteries.

US 2005/0233213 A1 discloses a negative active material for a rechargeable lithium battery, which includes a silicon-based composite having a silicon oxide of the form $SiO_x$ where x<=1.5 and at least one element selected from the group consisting of B, P, Li, Ge, Al, and V, and a carbonaceous material.

SUMMARY OF THE INVENTION

Provided is an anode active material for a lithium battery according to claim 1, in which a volume change of the anode active material according to charging/discharging of the battery is suppressed.

Provided is a lithium secondary battery having improved initial efficiency, charging/discharging characteristics, and capacity characteristics by including the anode active material.

Additional aspects will be set forth in part in the description which follows and, in part, will be apparent from the description, or may be learned by practice of the presented exemplary embodiments.

According to an aspect, an anode active material for a lithium secondary battery includes a silicon secondary particle, where the silicon secondary particle includes an agglomerate of an amorphous silicon primary particle and a crystalline silicon primary particle, and wherein the silicon secondary particle includes open pores, a size of the open pores is in a range of about 1 nanometer (nm) to about 10 micrometer ($\mu$m), and each of the open pores is formed as fine pores in the silicon secondary particle are connected.

An average particle diameter (D50) of the amorphous silicon primary particle and an average particle diameter (D50) of the crystalline silicon primary particle may be in a range of about 10 nm to about 10 $\mu$m.

The silicon secondary particle may further include at least one type of pores selected from closed pores and semi-closed pores.

A specific surface area of the silicon secondary particle may be in a range of about 2 $m^2$/g to about 100 $m^2$/g.

The agglomerate of the amorphous silicon primary particle and the crystalline silicon primary particle is a decomposition product of a silane gas in an inert gas atmosphere.

An average particle diameter (D50) of the silicon secondary particle may be in a range of about 0.1 $\mu$m to about 15 $\mu$m.

The silicon secondary particle may include a core part including an agglomerate of silicon primary particles having an average particle diameter (D50) in a range of about 1 $\mu$m to about 10 $\mu$m; and a porous shell part including an agglomerate of silicon primary particles having an average particle diameter (D50) in a range of about 50 nm to about

3 μm on a surface of the core part.

The core part may include i) an agglomerate of the crystalline silicon primary particles or ii) an agglomerate of amorphous silicon primary particles and crystalline silicon primary particles.

The shell part may include the agglomerate of the amorphous silicon primary particles and crystalline silicon primary particles.

The core part may occupy 60% of a distance from the center of the silicon secondary particle to a surface of the silicon secondary particle and the shell part occupies the remaining portion of the distance, and a porosity of the shell part may be at least about 1.7 times greater than a porosity of the core part.

The porosity of the core part may be in a range of greater than 0% to about 10%, and the porosity of the shell part is in a range of about 20% to about 90%.

An amount of the core part may be in a range of about 10 wt% to about 90 wt% based on a total weight of the silicon secondary particle.

An average particle diameter (D50) of the silicon secondary particle may be in a range of about 1.5 μm to about 15 μm. A specific surface area of the silicon secondary particle may be in a range of about 2 $m^2/g$ to about 100 $m^2/g$.

The crystalline silicon primary particle may include crystallites having an average diameter in a range of about 1 nm to about 100 nm.

The crystalline silicon primary particle may include first crystallites having an average diameter in a range of about 1 nm to about 5 nm; and second crystal crystallites having an average diameter in a range of about 10 nm to about 30 nm.

The silicon secondary particle may have two to five diffraction peaks within a diffraction angle 2θ of about 28.1° to about 28.6° based on X-ray diffraction (XRD) analysis. The silicon secondary particle may have a diffraction peak having a full width at half of maximum (FWHM) in a range of about 3° to about 5° within a diffraction angle 2θ of about 28.1° to about 28.6° based on X-ray diffraction (XRD) analysis.

An average particle diameter (D50) of the silicon secondary particle may be in a range of about 50 nm to about 10 μm.

A number of silicon (Si) atoms may be greater than a number of oxygen (O) atoms in the silicon secondary particle.

An atomic ratio of the silicon atoms to the oxygen atoms (Si/O) measured from a surface of the silicon secondary particle to a depth of about 10 nm to about 15 nm may be in a range of about 1 to about 4, as measured by X-ray photoelectron spectroscopy.

An area ratio (P1/P2) of a Si peak (P1) having a binding energy in a range of about 98 eV to about 102 eV to a $Si^{4+}$ peak (P2) having a binding energy in a range of about 102 eV to about 105 eV may be in a range of about 1 to about 19, as measured by X-ray photoelectron spectroscopy.

An average particle diameter (D50) of the silicon secondary particle may be in a range of about 20 nm to about 20 μm.

The silicon secondary particle may be decomposing decomposition product of a silane gas in an inert gas atmosphere.

The number of silicon (Si) atoms may be higher than the number of oxygen (O) atoms in the silicon secondary particle.

According to an aspect of another exemplary embodiment, a lithium secondary battery includes the anode active material.

BRIEF DESCRIPTION OF THE EMBODIMENTS

These and/or other aspects will become apparent and more readily appreciated from the following description of the exemplary embodiments, taken in conjunction with the accompanying drawings in which:

FIG. 1A is a schematic view of an embodiment of a silicon secondary particle;
FIG. 1B is another schematic view of an embodiment of a silicon secondary particle;
FIG. 1C is yet another schematic view of an embodiment of a silicon secondary particle;
FIG. 2A is a magnified scanning electron microscope (SEM) image (x2,500) of the silicon secondary particle prepared in Example 1;
FIG. 2B is a magnified SEM image (x2,000) of the silicon secondary particle prepared in Example 2;
FIG. 3A is a magnified SEM image (x8) of part I in FIG. 2A;
FIG. 3B is a magnified SEM image (x25,000) of a cross-sectional view of the silicon secondary particle prepared in Example 2, in which the silicon secondary particle is cut with a focused ion bombardment (FIB);
FIG. 4 is a magnified SEM image (x15,000) of a cross-sectional view of the silicon secondary particle prepared in Example 1, in which the silicon secondary particle is cut with a FIB;

FIG. 5 is a magnified SEM image (x10,000) of the silicon secondary particle prepared in Comparative Example 1;

FIG. 6 is a graph illustrating cycle characteristics of a lithium secondary battery prepared in Manufacture Example 1;

FIG. 7 is a graph illustrating cycle characteristics of a lithium secondary battery prepared in Comparative Manufacture Example 1;

FIG. 8 is a graph illustrating capacity characteristics (voltage versus specific capacity) and an anode expansion ratio (thickness change versus specific capacity) of a lithium secondary battery prepared in Manufacture Example 2;

FIG. 9 is a graph illustrating capacity characteristics (voltage versus specific capacity) and an anode expansion ratio (thickness change versus specific capacity) of a lithium secondary battery prepared in Comparative Manufacture Example 2;

FIG. 10 is a schematic view illustrating destruction of crystalline silicon particles;

FIG. 11 is an SEM image of an anode active material prepared in Example 3;

FIG. 12 is a magnified transmission electron microscope (TEM) image of part P1 in FIG. 11;

FIG. 13 is a magnified TEM image of part P2 in FIG. 11;

FIG. 14 shows an X-ray diffraction (XRD) pattern of the anode active materials prepared in Example 3 and Comparative Example 2;

FIG. 15 shows the Si (111) peak fitting result within a range of about 22.5° to about 35° of $2\theta$ (a Bragg's angle) of the XRD pattern shown in FIG. 14;

FIG. 16 is a graph showing a charging/discharging curve of a lithium secondary battery including the anode active material prepared in Manufacture Example 3;

FIG. 17 is a graph showing a charging/discharging curve of a lithium secondary battery including the anode active material prepared in Comparative Manufacture Example 2;

FIG. 18 shows compared analysis data of X-ray photoelectron spectroscopy (XPS) of silicon particles prepared in Examples 4 and 5 and Comparative Examples 3 and 4.

## DETAILED DESCRIPTION OF THE DRAWINGS

Reference will now be made in detail to exemplary embodiments, examples of which are illustrated in the accompanying drawings, wherein like reference numerals refer to like elements throughout. In this regard, the present exemplary embodiments may have different forms and should not be construed as being limited to the descriptions set forth herein. Accordingly, the exemplary embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

It will be understood that when an element is referred to as being "on" another element, it can be directly on the other element or intervening elements may be present therebetween. In contrast, when an element is referred to as being "directly on" another element, there are no intervening elements present.

It will be understood that, although the terms "first," "second," "third" etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, "a first element," "component," "region," "layer" or "section" discussed below could be termed a second element, component, region, layer or section without departing from the teachings herein.

The terminology used herein is for the purpose of describing particular embodiments only and is not intended to be limiting. As used herein, the singular forms "a," "an," and "the" are intended to include the plural forms, including "at least one," unless the content clearly indicates otherwise. "Or" means "and/or." As used herein, the term "and/or" includes any and all combinations of one or more of the associated listed items. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Furthermore, relative terms, such as "lower" or "bottom" and "upper" or "top," may be used herein to describe one element's relationship to another element as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The exemplary term "lower," can therefore, encompasses both an orientation of "lower" and "upper," depending on the particular orientation of the figure. Similarly, if the device in one of the figures is turned over, elements described as "below" or "beneath" other elements would then be oriented "above" the other elements. The exemplary terms "below" or "beneath" can, therefore, encompass both an orientation of above and below.

"About" or "approximately" as used herein is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" can mean within one or more standard deviations, or within ± 30%, 20%, 10% or 5% of the stated value.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

Methods of using metals such as silicon (Si) or tin (Sn) that have a charging/discharging capacity higher than that of a carbonaceous material and which may be electrochemically alloyable with lithium as an anode active material have been conducted. For example, a theoretical maximum capacity of silicon is about 4,200 mAh/g which is relatively high compared to that of a carbonaceous material, and thus silicon is suitable to be used as a high capacity anode material.

However, when such metals are used as the anode active material, a volume change in the anode active material as charging/discharging of the battery increases, and thus the anode active material may be pulverized and may have cracks. Thus, a capacity of the secondary battery including the anode active material rapidly decreases as the number of charging/discharging cycles performed on the battery increases, and thus cycle lifespan of the battery is reduced. For example, when lithium ions are intercalated in silicon to the maximum amount during a charging process, the silicon is converted into $Li_{4.4}Si$, where the volume of silicon expands about 4.12 times before the charging process, and the volume of silicon decreases when lithium ions are deintercalated due to a discharging process. When the number of charging/discharging cycles increases, the processes of pulverization, aggregation, and fracturing of silicon particles repeats, the silicon particles are electrically disconnected, and thus an electrode deteriorates, which may result in losing most of the capacity of the battery within 10 cycles of the charging/discharging process. That is, the reason why an alloy-based anode material having a high capacity may not be easily commercialized is because the material loses electrical contact after undergoing continuous expansion and contraction during the charging/discharging process, and thus an electrode resistance increases in a short period of time.

There is therefore a need to develop an anode active material for a lithium secondary battery that is capable of reducing pulverization of silicon particles and improving battery performance by suppressing the volume change of the silicon particles which occurs during charging/discharging of the lithium secondary battery.

According to one or more embodiments, an anode active material for a lithium secondary battery and a lithium secondary battery including the anode active material will be described in detail.

Provided is an anode active material for a lithium secondary battery, wherein the anode active material includes a silicon secondary particle, in which the silicon secondary particle is an agglomerate of an amorphous silicon primary particle and a crystalline primary particle. The silicon secondary particle includes open pores, wherein the open pores have an average diameter of about 1 nm to about 10 μm, and each of the open pores in the silicon secondary particle are connected.

The silicon secondary particle is formed when the amorphous silicon primary particle and the crystalline silicon primary particle are agglomerated while forming the open pores. The pores may compensate for the expansion of silicon during a charging process and thus may suppress a volume change in the silicon as a result of a charging/discharging process. Also, since lithium ions may penetrate deep within the active material through the pores, a surface area of silicon that may react with the lithium ions increases, and thus charging/discharging capacity of the battery may increase. Thus, when the silicon secondary particle is used as an anode active material, the pulverization of silicon particles associated with repeated charging/discharging process of the battery may be suppressed, and thus battery characteristics may improve.

As used herein, the terms "size of the pore(s)" or "average pore diameter" refer to an average size of the pores as measured by the diameter. The average pore diameter is measured by mercury porosimetry in accordance with the standard JIS R 1655 ("Method of measuring molded pore diameter distribution by mercury porosimetry of Fine ceramics"), which measures the relationship between pressure and weight of mercury when mercury is inserted in a pore.

The average pore diameter is in a range of about 1 nm to about 10 μm. When the size of the pores is less than 1 nm, the pores may not effectively serve as a buffering material with respect to the volume change of silicon which occurs during the charging/discharging process. Further, when the size of the pores is greater than 10 μm, the reaction area for lithium ions and silicon particles to react decreases.

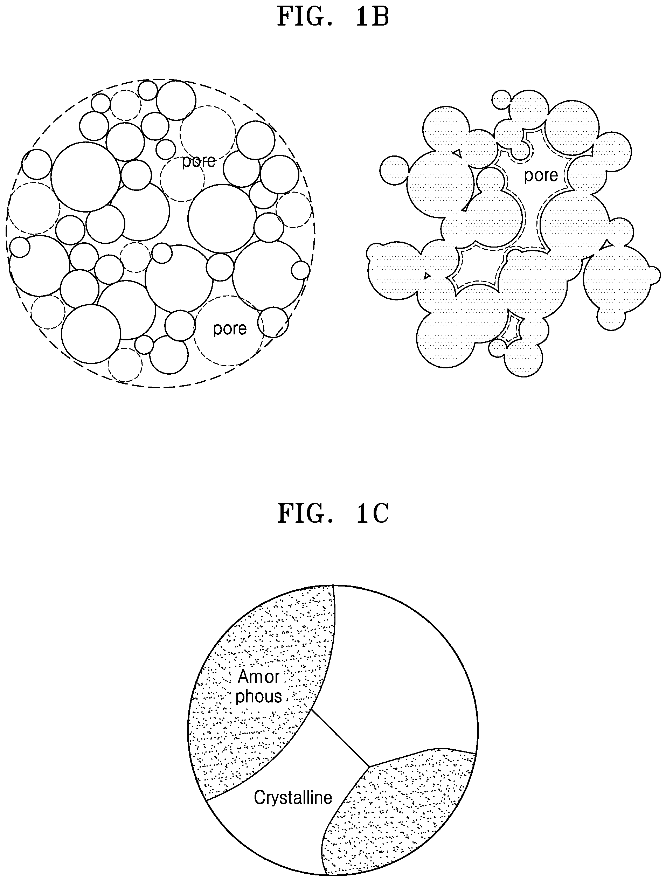

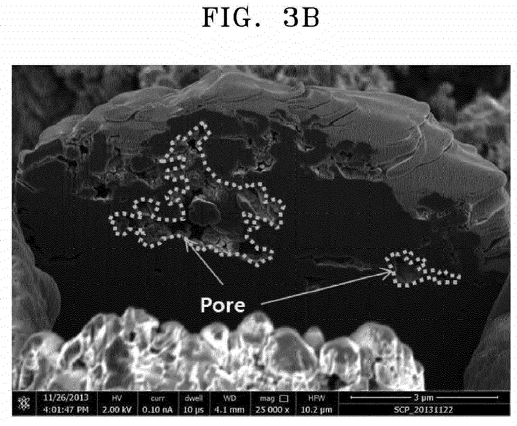

The anode active material may further include at least one type of pores selected from closed pores and semi-closed pores. FIG. 1B schematically illustrates the silicon secondary particle including pores formed between the silicon primary particles. Also, FIG. 3B is a focused ion bombardment-scanning electron microscope (FIB-SEM) image of the silicon secondary particle prepared in Example 1, and thus it may be confirmed that the silicon secondary particle includes pores formed of fine pores that are 3-dimensionally connected to each other.

The amorphous silicon primary particle is a material including silicon atoms that are arranged with almost no regularity. Also, since the amorphous material does not have a single structure, unlike a crystalline material, an expansion ratio of the amorphous material due to a charging process is lower than that of the crystalline material. In this regard, the amorphous material deteriorates less by the charging/discharging process as compared to the crystalline material. Also, for example, the amorphous material may improve the output characteristics of the battery to a greater degree than the crystalline material. This is because the amorphous material has less oxidation coating area per volume, and because a sufficient amount of lithium may be intercalated and deintercalated through diffusion pathways of lithium ions in the amorphous silicon primary particle.

The crystalline silicon primary particle is a crystalline particle formed of crystallites (also referred to as "grains") having different orientations which improves the strength of the silicon secondary particle.

As described above, the amorphous silicon primary particle and the crystalline silicon primary particle may have a size that is similar to that of the pores. Thus the size of the crystalline silicon primary particle may be, for example, an average diameter in a range of about 10 nm to about 10 μm, as well as the size of the pores. The porosity of the silicon secondary particle as measured by mercury porosimetry refers to a volume ratio of the pores in the silicon secondary particle which may be calculated by Equation 1 below. The porosity of the silicon secondary particle may be, for example, in a range of about 50% to about 80%. When the porosity is within this range, the silicon secondary particle may serve as a buffer material with respect to the volume change of silicon according to a charging process without difficulty, and a reactivity of the silicon secondary particle may not decrease due to a reduction in a reaction area between lithium ions and the silicon particles. Thus, when the silicon secondary particle having a porosity within this range is used, a lithium secondary battery may have improved initial efficiency and cycle characteristics.

[Equation 1]

$$\text{Porosity (\%)} = \{1-(\text{Bulk density/Apparent density})\} * 100$$

Bulk density: An actual density including pores of a sample; Apparent density: a theoretical density not including pores of a sample

A specific surface area of the silicon secondary particle measured by Brunauer, Emmett & Teller (BET) may be, for example, in a range of about 2 square meters per gram ($m^2$/g) to about 100 $m^2$/g. When the specific surface area of the silicon secondary particle is within this range, the area for lithium ions and silicon particles to react may not decrease, and thus the reactivity of the silicon secondary particle may not deteriorate. Also, the initial efficiency and cycle characteristics may not be all deteriorated by an increase in the amount of a binder used to maintain a current collecting property and degradation of manufacturing characteristics of an anode for a lithium secondary battery. Therefore, when the silicon secondary particle is used, a lithium secondary battery may have improved initial efficiency and cycle characteristics.

An average particle diameter of the silicon secondary particle may be, for example, in a range of about 0.1 μm to about 15 μm. When the average particle diameter of the silicon secondary particle is not in this range, an anode mixed density may deteriorate, and homogeneity in a high-speed anode coating process may be degraded.

As used herein, the "average particle diameter" or "average particle diameter (D50)" is a weight average value D50, i.e., the value of a particle diameter or a median diameter at 50% in the cumulative particle size distribution, as measurement using a laser diffraction method.

The silicon secondary particle may be an agglomerate of the amorphous silicon primary particle and the crystalline silicon primary particle, in which the agglomerate is a decomposition product of a silane gas in an inert atmosphere. That is, the agglomerate may be obtained by thermally decomposing or reductive decomposing a silane gas at a temperature of, for example, about 600°C to about 1400°C in an inert gas atmosphere., The silicon secondary particle may be, for example, obtained as a side product from preparation of polycrystalline silicon by using a fluidized bed reactor (FBR) method available from MEMC Electronic Materials.

The silane gas includes silane or a silane derivative. More specifically, the silane gas may be at least one selected from monosilane, disilane, chlorosilane, dichlorosilane, and trichlorosilane; and the inert gas may be at least one selected from diborane, phosphine, and argon gas.

As described above, the silane gas is thermally or reductively decomposed in an inert gas atmosphere, and as a result, surface oxidation of the silicon particle may be prevented. Thus, when a lithium secondary battery is prepared using the silicon particle, a charging efficiency of the lithium secondary battery is high. Also, the amorphous silicon primary particle, crystalline silicon primary particle, and silicon secondary particle may all be manufactured in one reactor, and thus a manufacturing process may also be simple and economical.

In some embodiments, an anode active material for a lithium secondary battery includes a silicon secondary particle including a core part and a shell part. The core part includes an agglomerate of silicon primary particles having an average particle diameter (D50) in a range of about 1 $\mu$m to about 10 $\mu$m; and the shell part includes an agglomerate of silicon primary particles having an average particle diameter (D50) in a range of about 50 nm to about 3 $\mu$m.

Since the core part includes the silicon primary particles having relatively large average particle diameter (D50), the anode active material is capable of intercalating an increased amount of lithium ions during a charging process, and thus a charging capacity of the lithium secondary battery may increase. However, the shell part includes the silicon primary particles having a relatively smaller average particle diameter (D50) and the pores compensate for the volume expansion of the anode active material that may occur during the charging process. Thus, when the silicon secondary particle is used as an anode active material, pulverization of the silicon particles due to a volume change accompanied by repeated charging/discharging process of the battery may be suppressed, and thus battery characteristics may improve.

When the average particle diameter (D50) of the silicon primary particles in the core part is within the above range, a specific surface area of the silicon secondary particle increases, and thus an irreversible capacity during charging/discharging process does not increase.

When the shell part may compensate for the expansion of the volume of the core part which occurs during the charging process, particle pulverization may not occur. Thus, the lithium secondary battery including the silicon secondary particle may have improved initial efficiency and cycle characteristics. Also, when the average particle diameter (D50) of the silicon primary particles in the shell part is within this range, the silicon secondary particle may not be eluted by an external stimulus, such as heat, that is generated during the discharging process, Thus, the lithium secondary battery including the silicon secondary particle may have improved initial efficiency and cycle characteristics due to compensation for the volume expansion which occurs during the charging process. Here, the average particle diameter (D50) is a weight average value D50, that is, the value of a particle diameter or a median diameter at 50% in the cumulative particle diameter distribution, as measured by laser diffraction.

Also, the pores in the shell part compensate for the volume expansion of the silicon primary particles and thus may serve as a buffer material with respect to a volume change of the silicon particle caused by the charging/discharging process. The pores may be at least one type selected from open pores, closed pores, and semi-closed pores. The pores may be, for example, open pores, and since lithium ions may further deeply permeate inside the active material through the pores, a surface area of silicon that may react with lithium ions increases, which may result in an improvement in the charging/discharging capacity of the battery.

The core part may be prepared by, for example, agglomerating crystalline silicon primary particles, or, for example, by further agglomerating amorphous silicon primary particles to crystalline silicon primary particles. However, the shell part includes an agglomerate of amorphous silicon primary particles and crystalline silicon primary particles.

The crystalline silicon primary particles are crystalline particles that are formed of crystallites having various orientations. Thus, the crystalline silicon primary particles are capable of intercalating an increased amount of lithium ions during a charging process and may improve strength of the silicon secondary particle.

The amorphous silicon primary particle is a material in which silicon atoms are arranged with almost no regularity, and an amorphous material does not have a single structure, unlike a crystalline material. Accordingly, the expansion ratio of the amorphous material by charging is lower than the expansion ratio of the crystalline material, and thus less deterioration caused by charging/discharging occurs in the amorphous material as compared to the crystalline material. Also, the amorphous material has excellent output characteristics compared to those of the crystalline material, and this may be because of a small oxidation coating area per volume; and a sufficient amount of lithium may be intercalated or deintercalated through diffusion pathways of lithium ions in the amorphous material.

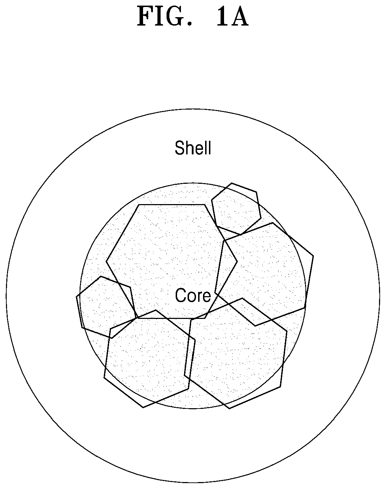

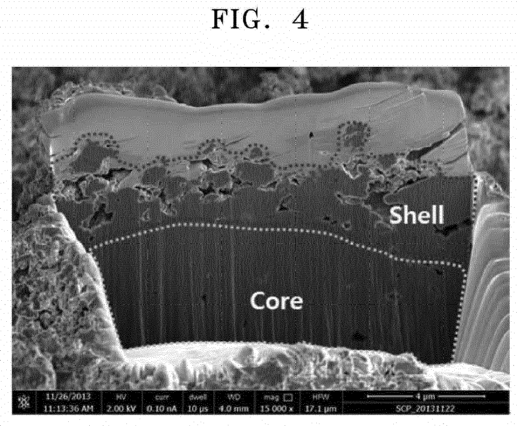

In an embodiment of the silicon secondary particle, the core part may have a relatively highly compact crystalline structure, and the shell part may have a more porous structure. FIG. 1A is a schematic view of an embodiment of the silicon secondary particles, and FIG. 4 is a FIB-SEM image of the silicon secondary particle prepared in Example 1. In FIG. 4, the silicon secondary particle including the core part having a relatively highly compact crystalline structure and the porous shell part may be clearly seen. The core part refers to the portion of the secondary particle that covers about 60% region of a distance from the center of the silicon secondary particle to an outer surface of the secondary particle; and the shell part is the remaining portion thereof. The porosity of the shell part is about 1.7 times to about 50 times greater than the porosity of the core part. In some embodiments, a porosity of the core part is in a range of greater than about 0% to about 10%, and a porosity of the shell part may be in a range of about 20% to about 90%. In this regard, when the core part has a relatively compact structure and the shell part has a relatively porous structure, the shell part may compensate for the volume expansion of the silicon secondary particle occurring during a charging process, and thus, ultimately, the degradation of battery characteristics accompanied by the volume change during the charging/discharging process may be suppressed.

The porosity denotes the volume ratio of the pores in the particle and may be calculated by Equation 2. Here, the porosity may be measured by mercury porosimetry in accordance with JIS R 1655 ("Method of measuring molded pore diameter distribution by mercury porosimetry of Fine ceramics") which measures the relationship between pressure and a weight of mercury when mercury is inserted in a pore.

[Equation 2]

Porosity(%) = {1-(Bulk density/Apparent density)} * 100

In Equation 2, the bulk density refers to an actual density of a sample including pores, and an apparent density refers to a theoretical density of a sample not including pores.

In some embodiments, an amount of the core part may be in a range of about 10 wt% to about 90 wt% based on a total weight of the silicon secondary particle. When the amount of the core part is less than about 10 wt%, an electrode formed of the silicon secondary particle may have a low density in a battery, and thus the capacity per volume of the battery may be low. Also, when the amount of the core part is higher than about 90 wt%, the volume expansion ratio increases during a charging process, and thus the silicon particles may be pulverized.

In some embodiments, an average particle diameter (D50) of the silicon secondary particle may be in a range of about 1.5 $\mu$m to about 15 $\mu$m. When the average particle diameter (D50) of the silicon secondary particle is within this range, a mixed density of the anode and homogeneity in a high-speed anode coating process may not deteriorate, and thus a lithium secondary battery including the silicon secondary particle may have excellent cycle characteristics and capacity characteristics.

The specific surface area of the silicon secondary particle as measured by Brunauer, Emmett & Teller (BET) measurement is in a range of about 2 $m^2$/g to about 100 $m^2$/g. When the specific surface area of the silicon secondary particle is within this range, the reaction surface between the lithium ions and the silicon particles reduces, and thus reactivity may not deteriorate. Further, an amount of a binder to maintain a current collecting property of the particle may not increase, and manufacturing characteristics of an anode for a lithium secondary battery may not deteriorate. Thus, the lithium secondary battery including the silicon secondary particle may have excellent initial efficiency and cycle characteristics.

The silicon secondary particle may be an agglomerate of the amorphous silicon primary particle and the crystalline silicon primary particle obtained by thermally decomposing or reductively decomposing a silane gas at a temperature in a range of about 600°C to about 1400°C in an inert gas atmosphere. The silicon secondary particle may be obtained as a side product in the preparation of polycrystalline silicon by using a fluidized bed reactor (FBR) (available from MEMC Electronic Materials).

The silane gas includes silane or a silane derivative, and the silane gas may be at least one of monosilane, disilane, chlorosilane, dichlorosilane, trichlorosilane, and a combination thereof. Examples of the inert gas may be at least one of diborane, phosphine, argon gas, and a combination thereof.

As described above, since the silane gas is decomposed in an inert gas atmosphere, surface oxidation of the silicon particle may be prevented, and thus when a lithium secondary battery is prepared using the silicon particle, a discharging efficiency of the lithium secondary battery is high. Also, the amorphous silicon primary particle, the crystalline silicon primary particle, and the silicon secondary particle may all be manufactured in one reactor, and thus a manufacturing process may also be both simple and economical.

According to another embodiment, provided herein is a silicon particle that is both amorphous and crystalline, an anode active material including the silicon particles, and a lithium secondary battery including the silicon particle.

A solid material may be crystalline or amorphous depending on the arrangement of the atoms in the solid material. The terms "crystalline" and "amorphous" as used herein mean their usual meanings in the art. In particular, the crystalline solid includes atoms that are arranged with three-dimensional regularity. This regular arrangement occurs because the atoms are aligned, due to the intrinsic properties of the atoms, so that each of the atoms may have minimum thermodynamic energy. However, the amorphous solid includes atoms that are not arranged with regularity, and thus, even though the amorphous solid is in a solid state, the arrangement of the atoms are structurally irregular in the amorphous solid.

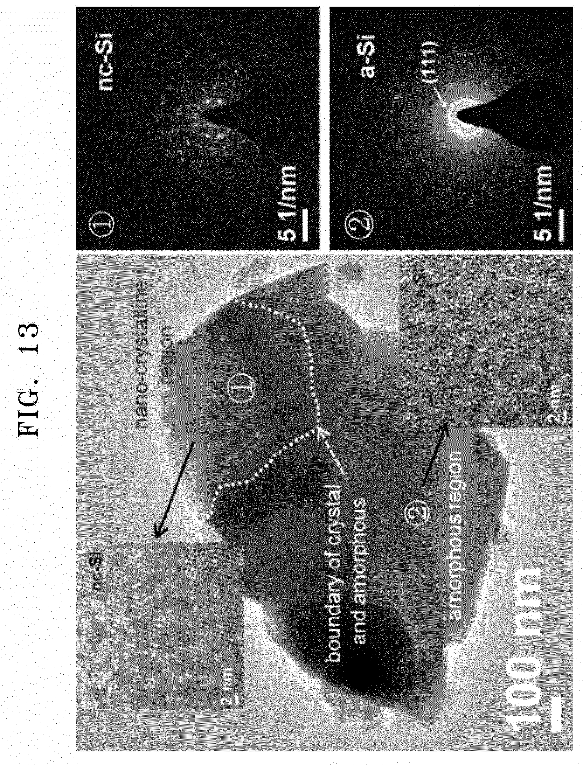

In an embodiment, the silicon particle includes both amorphous and crystalline properties in one particle. A structure of the silicon particle is schematically shown in FIC. 1C, and a transmission electron microscope (TEM) image of the silicon particle is shown in FIG. 13. The amorphous part of the silicon particle, in which silicon (Si) atoms are irregularly arranged, serves as a buffer that absorbs stress caused by volume expansion that occurs when lithium ions are intercalated due to a charging process. Also, a crystalline part of the silicon particle, in which silicon (Si) atoms are regularly arranged, increases strength of the silicon particle. When a silicon particle has both amorphous and crystalline properties in one particle, destruction of the particle caused by volume expansion that occurs during a charging process may be minimized.

According to another aspect, provided is an anode active material, in which particle destruction which occurs due to volume expansion during a charging process, is reduced. When a lithium secondary battery includes the anode active material, the lithium secondary battery may have improved charging/discharging capacity, improved initial efficiency, and improved lifespan characteristics.

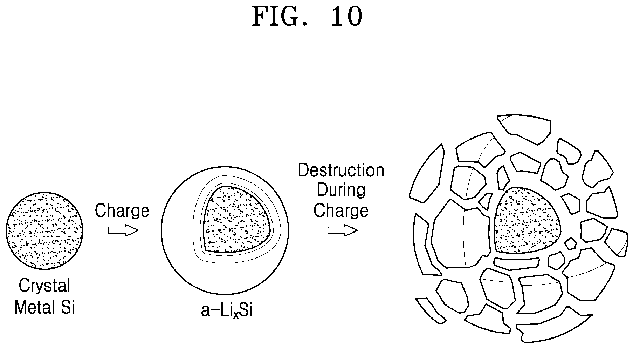

However, as illustrated in FIG. 10, a metal silicon including only crystalline part may not tolerate the stress caused by volume expansion during a charging process and thus may be destroyed. When a lithium secondary battery includes the metal silicon, battery characteristics such as initial charging/discharging efficiency and lifespan characteristics may deteriorate.

In an embodiment, the crystalline part of the silicon particle may include crystallites having an average diameter in a range of about 1 nm to about 100 nm. More specifically, the crystallites may include first crystallites having a size in a range of about 1 nm to about 5 nm and second crystallites having a size in a range of about 10 nm to about 30 nm. When the silicon particle includes a plurality of crystallites in the nanosize ranges described herein, a volume change according to charging/discharging may be reduced as compared to a general metal silicon. This is due to a volume expansion buffering effect of a particle boundary, which may result in improved battery performance. The size of the crystallites may be determined by the Scherrer method from the full width at half maximum (FWHM) of a diffraction peak assigned to Si(111) within a $2\theta$ range of about 28.1° to about 28.6° as measured by X-ray diffraction pattern analysis or may be confirmed by a TEM analysis. Here, the FWHM refers to a difference in width of a diffraction angle $2\theta$ at half of the maximum intensity value of a diffraction peak. As used herein, the term "a size of particle" (e.g., a crystallite or a silicon particle) refers to an average diameter of the particle when the particle has a spherical shape. The silicon particle may have two or more diffraction peaks within a $2\theta$ range of about 28.1° to about 28.6° in X-ray diffraction pattern analysis, or, more specifically, two to five diffraction peaks. This indicates that at least two different types of crystallites having different sizes are included in one silicon particle or that particles having different crystallite sizes are mixed therein.

Also, the silicon particle may have a diffraction peak having a FWHM in a range of about 3° to about 5° within a $2\theta$ range of about 28.1° to about 28.6° in X-ray diffraction pattern analysis, and this indicates that the silicon particle includes crystallites having an average diameter of about 1 nm to about 5 nm. An average diameter of the silicon particle may be, for example, in a range of about 50 nm to about 10 $\mu$m, and when the size of the silicon particle is within this range, the silicon particle may have both crystalline and amorphous properties in one particle. Also, due to an increase in the number of pathways of lithium ions, output characteristics may not be degraded, and thus when a lithium secondary battery includes the silicon particle, a charging/discharging capacity, initial efficiency, and lifespan characteristics of the lithium secondary battery may improve.

In some embodiments, an anode active material for a lithium battery may include the silicon particle. Here, the silicon particle in the anode for a lithium secondary battery may be selected from only silicon particle, a silicon secondary particle formed by agglomerating the silicon particles, and a mixture particle thereof.

The silicon secondary particle includes pores, and the pores compensate for the volume expansion of the silicon particle that may occur during a charging process, and thus prevent degradation of battery characteristics caused by a volume change. Since the pores may compensate for the expansion of silicon during a charging process, they may also suppress a volume change of silicon according to a charging/discharging process. Also, since lithium ions may penetrate further deep in the active material through the pores, a surface area of silicon that may react with the lithium ions increases, and thus charging/discharging capacity of the battery may also increase.

An average particle diameter (D50) of the silicon secondary particle may be, for example, in a range of about 0.1 $\mu$m to about 15 $\mu$m. When the average particle diameter (D50) of the silicon secondary particle is within this range, a density of an anode mixture and homogeneity in a high-speed anode coating process may not deteriorate, and thus a lithium secondary battery including the silicon secondary particle may have an improved charging/discharging capacity, improved initial efficiency, and improved cycle characteristics.

The average particle diameter (D50) is a weight average value D50, i.e., a value of a particle diameter or a median diameter at 50% in the cumulative particle size distribution, as measured using a laser diffraction method.

The silicon particle and the silicon secondary particle may be obtained by thermally decomposing or reductively decomposing a silane gas at a temperature of, for example, about 600°C to about 1400°C in an inert gas atmosphere, and the silicon secondary particle may be, for example, obtained as a side product from preparation of polycrystalline silicon by using a fluidized bed reactor (FBR) method (available from MEMC Electronic Materials).

In an embodiment, the anode active material may further include at least one of an amorphous silicon particle and a crystalline silicon particle.

According to another aspect, an anode active material for a lithium secondary battery is provided as an anode active material including a silicon particle, wherein the number of silicon atoms is higher than the number of oxygen atoms in the silicon particle.

According to another embodiment, an anode active material includes a silicon particle, of which an amount of $SiO_2$ formed by surface oxidation is minimized. That is, in the anode active material, a ratio of the number of silicon (Si) atoms is higher than a ratio of the number of oxygen (O) atoms in the particle. In this regard, when a battery includes the anode active material, an initial efficiency, a battery capacity, and lifespan characteristics of the battery may improve.

Surface oxidation may occur on the silicon particle used as an anode active material in a lithium secondary battery, in general, by moisture absorption. Due to the surface oxidation, $SiO_2$ is formed on the silicon particle, and $SiO_2$ may cause deterioration of an initial efficiency of a battery. Also, when an oxygen fraction on a surface of the silicon particle increases, $SiO_2$ acts as surface resistance during intercalation of lithium, and thus electrochemical characteristics, for example, battery capacity and lifespan characteristics, of a lithium secondary battery may deteriorate. In this regard, in one embodiment, the anode active material for a lithium battery may include a silicon particle including the minimum amount of $SiO_2$, that is, the number of silicon (Si) atoms is higher than the number of oxygen (O) atoms in the silicon particle, and thus an initial efficiency, a battery capacity, and lifespan characteristics of the lithium secondary battery may improve.

As used herein, a ratio of the number of silicon (Si) atoms to the number of oxygen (O) atoms (Si/O, a normalized atomic ratio), as measured by an X-ray photoelectron spectroscopy (XPS) method, may be in a range of about 1 to about 4. When the ratio of Si/O is within this range, an amount of $SiO_2$ is lowenough, so that an initial efficiency of a battery may not decrease, and thus the silicon particle may be used as an active material. Here, a Si/O atomic ratio does not denote the atomic ratio of the whole particle but rather, an atomic ratio of the particle of about 15 nm in depth from the surface of the particle as generally obtained by XPS analysis,.

Also, in the XPS analysis of the silicon particle, an area ratio (P1/P2) of a Si peak (P1) having a binding energy in a range of about 98 eV to about 102 eV to a Si4+ peak (P2) having a binding energy in a range of about 102 eV to about 105 eV, is in a range of about 1 to about 19. Here, the area ratio is determined by dividing a P1 value with a P2 value. $Si^{4+}$ is derived from $SiO_2$. Therefore, a large area and a high intensity of P2 indicate that a ratio of Si binding with oxygen is high. When the area ratio of the silicon particle is within this range, an initial efficiency of the battery is high, and an irreversible capacity of the battery may not increase.

An average particle diameter (D50) of the silicon particle may be, for example, in a range of about 20 nm to about 20 $\mu$m.

The silicon secondary particle may be obtained by thermally decomposing or reductively decomposing a silane gas at a temperature in a range of about 600°C to about 1400°C in an inert gas atmosphere, or may be obtained as a side product in preparation of polycrystalline silicon by using a fluidized bed reactor (FBR) method.

The silane gas includes silane or a silane derivative, and the silane gas may be at least one of monosilane, disilane, chlorosilane, dichlorosilane, and trichlorosilane. Examples of the inert gas may be at least one of diborane, phosphine, and argon gas.

As described above, when a bottom-up type preparation method is used, in which a size of the particle is increased to the desired size in an atomic unit by decomposing a silane derivative in an inert atmosphere, surface oxidation in the silicon particle may occur less as compared to a silicon particle prepared by a top-down preparation method in which a metal silicon particle having a relatively large average particle diameter is pulverized to have a smaller diameter. Since an amount of $SiO_2$ formed by surface oxidation may be minimized, when a lithium secondary battery includes an anode active material including the silicon particle according to an embodiment, an initial efficiency and a battery capacity of the lithium secondary battery may improve.

According to another embodiment, provided is a lithium secondary battery including the anode active material. In general, a lithium secondary battery includes an anode including the anode active material, a cathode including a cathode active material, a separator; and a non-aqueous electrolyte solution.

In one embodiment, the anode active material may be prepared as an anode. For example, the anode according may be prepared by mixing and stirring a composition for an anode including the anode active material disclosed herein, a conducting agent, and a binder. A solvent, and, optionally, other additives are combined with the composition for an anode to prepare a slurry, and the slurry is coated and pressed on a current collector.

The composition for an anode may include the anode active material in an amount in a range of about 3 weight percent (wt%) to about 90 wt%, the conducting agent in an amount in a range of about 5 wt% to about 95 wt%, and the binder at an amount of about 1 wt% to about 20 wt%. Here, the anode active material may be the silicon secondary particle described herein. Also, when the amount of the anode active material is less than about 3 wt%, a level of silicon in the electrode may be insufficient, which may result deterioration of an anode capacity. When the amount of the anode active material is greater than about 90 wt%, an amount of silicon in the electrode may be high, and thus the electrode may expand in terms of its volume.

Also, when the amount of the conducting agent is less than about 5 wt%, conductivity of the battery may be insufficient, which may result an increase in an initial resistance. When the amount of the conducting agent is greater than about 95 wt%, a battery capacity may be degraded. The conducting agent may be at least one selected from the group consisting of hard carbon, graphite, and carbon fibers. More specifically, the conducting agent may be at least one selected from natural graphite, artificial graphite, cokes powders, mesophase carbon, vapor-growth carbon fibers, pitch-based carbon fibers, PAN-based carbon fibers, and carbides of other resin plastic materials.

Also, when the amount of the binder is less than about 1 wt%, an anode active material may be separated from the current collector. When the amount of the binder is greater than about 20 wt%, an immersion area of silicon and an electrolyte solution decreases, and thus movement of lithium ions may be suppressed. The binder may include at least one selected from the group consisting of polyimide (PI), polyamideimide (PAI), polytetrafluoroethylene (PTFE), polyvinylidene fluoride (PVdF), polyacrylic acid, poly(methyl methacrylate) (PMMA), polyacrylonitrile (PAN), styrene-butadiene rubber (SBR), carboxymethyl cellulose (CMC), and water-soluble polyacrylic acid (PAA).

Also, the solvent may be at least one of N-methyl-2-pyrrolidone, acetone, and water.

A thickness of the anode current collector may be in a range of about 3 $\mu$m to about 500 $\mu$m. The anode current collector is not particularly limited as long as it does not generate any chemical change in the battery and has a high conductivity. The anode current collector may include at least one of copper, stainless steel, aluminum, nickel, titanium, calcined carbon, copper or stainless steel that is surface-treated with carbon, nickel, titanium, or silver, and an aluminum-cadmium alloy.

In some embodiments, after preparing a slurry by mixing a cathode active material, a conducting agent, a binder, and a solvent, the slurry may be directly coated on a metal current collector; or may be cast on a separate support, and a cathode active material film detached from the support may be laminated on a metal current collector to prepare a cathode.

The cathode active material may be, for example, at least one of a layered compound of a lithium cobalt oxide ($LiCoO_2$) or a lithium nickel oxide ($LiNiO_2$); a lithium manganese oxide represented by $Li_1+yMn_2-yO_4$ (where, y is 0 to 0.33), $LiMnO_3$, $LiMn_2O_3$, or $LiMnO_2$; a lithium copper oxide represented by $Li_2CuO_2$; a vanadium oxide represented by $LiV_3O_8$, $LiFe_3O_4$, $V_2O_5$, or $Cu_2V_2O_7$; a Ni-site type lithium nickel oxide represented by $LiNi_1-yMyO_2$ (where, M = Co, Mn, Al, Cu, Fe, Mg, B, or Ga; and y is 0.01 to 0.3); a lithium manganese complex oxide represented by $LiMn_2-yMyO_2$ (where, M = Co, Ni, Fe, Cr, Zn, or Ta; and y is 0.01 to 0.1) or $Li_2Mn_3MO_8$ (where, M = Fe, Co, Ni, Cu, or Zn); and $LiMn_2O_4$ in which a part of Li is substituted with an alkali-earth metal, but embodiments are not limited thereto.

The separator may be a general porous polymer film that is used as a separator. For example, a porous polymer film formed of a polyolefin-based polymer may be used alone or as a stacked structure thereof. The polyolefin-based polymer may be at least one of an ethylene homopolymer, a propylene homopolymer, an ethylene/butene co-polymer, an ethylene/hexene co-polymer, and an ethylene/methacrylate co-polymer. A general porous non-woven fabric, for example, non-woven fabric formed of glass fibers or polyethylene terephthalate fibers having a high melting point may be used as the separator, but is not limited thereto.

In the electrolyte solution, a lithium salt may be included as an electrolyte. The lithium salt may be any lithium salt generally used as an electrolyte solution for a lithium secondary battery in the art. Examples of an anion of the lithium salt may include one or more of F$^-$, Cl$^-$, I$^-$, Nv$_3$-, N(CN)$_2^-$, BF$_4^-$, ClO$_4^-$, PF$_6^-$, (CF$_3$)$_2$PF$_4^-$, (CF$_3$)$_3$PF$_3^-$, (CF$_3$)$_4$PF$_2^-$, (CF$_3$)$_5$PF$^-$, (CF$_3$)$_6$P$^-$, CF$_3$SO$_3^-$, CF$_3$CF$_2$SO$_3^-$, (CF$_3$SO$_2$)$_2$N$^-$, (FSO$_2$)$_2$N$^-$, CF$_3$CF$_2$(CF$_3$)$_2$CO$^-$, (CF$_3$SO$_2$)$_2$CH$^-$, (SF$_5$)$_3$C$^-$, (CF$_3$SO$_2$)$_3$C$^-$, CF$_3$(CF$_2$)$_7$SO$_3^-$, CF$_3$CO$_2^-$, CH$_3$CO$_2^-$, SCN$^-$, and (CF$_3$CF$_2$SO$_2$)$_2$N$^-$.

An organic solvent included in the electrolyte solution may be any solvent used as an organic solvent in the art. An example of the organic solvent may include one or more of propylene carbonate, ethylene carbonate, diethyl carbonate, dimethyl carbonate, ethyl methyl carbonate, methyl propyl carbonate, dipropyl carbonate, dimethyl sulfoxide, acetonitrile, dimethoxyethane, diethoxyethane, vinylene carbonate, sulfolane, gamma-butyrolactone, propylene sulfite, and tetrahydrofuran.

Among the examples of carbonate-based organic solvents, ethylene carbonate and propylene carbonate, which are cyclic carbonates, have a high viscosity and a high dielectric constant, and thus may easily dissolve a lithium salt in the electrolyte. Therefore, ethylene carbonate and propylene carbonate may be used as the organic solvent. Also, when dimethyl carbonate or diethyl carbonate, which are a linear carbonates having a low viscosity and a low dielectric constant, is mixed to the cyclic carbonate at an appropriate ratio, the prepared electrolyte may have a high electrical conductivity.

In one embodiment, the electrolyte according may further include an additive such as an overcharge inhibiting agent.

The separator is disposed between the cathode and the anode to prepare a battery structure. The battery structure is wound or folded and accommodated in a cylindrical or rectangular battery case, and the electrolyte solution is injected thereto, thereby completing preparation of a lithium secondary battery. Alternatively, the battery structure may be stacked in a bi-cell structure, the bi-cell structure may be impregnated in the electrolyte solution, and the resultant may be placed in a pouch and sealed, thereby completing preparation of a lithium secondary battery.

Hereinafter, one or more embodiments will be described in detail with reference to the following examples. However, these examples are not intended to limit the scope of the one or more embodiments.

<Preparation of anode active material of lithium secondary battery>

Example 1

In the stream of argon (Ar) flow, polycrystalline silicon particle seeds were added to a fluidized bed reactor having an inner temperature at about 800°C. In the reactor, silicon produced by thermal decomposition of monosilane was precipitated on surfaces of the seeds in the flow, and thus the seeds grew in this manner to form crystalline silicon primary particles. When the crystalline silicon primary particles agglomerated, a core part was formed. An average particle diameter (D50) of the crystalline silicon primary particles of the core part was about 5.2 $\mu$m, and a porosity of the core part formed by agglomerating the primary particles was about 4.3%.

Then, trichlorosilane (SiHCl$_3$) was injected into the fluidized bed reactor having an inner temperature at about 800°C, and the contents in the reactor were allowed to react.

As a result, silicon secondary particles including amorphous silicon primary particles prepared by thermal decomposition of monosilane and crystalline silicon primary particles formed by growth of the seeds were prepared. Each of the silicon secondary particles has a core-shell structure, in which a shell part is agglomerated on a surface of the core part and includes pores. An average particle diameter D50 of the amorphous silicon primary particles and the crystalline silicon primary particles that form the shell part was about 170 nm, and a porosity of the shell part formed by agglomerating the primary particles was about 32.7%.

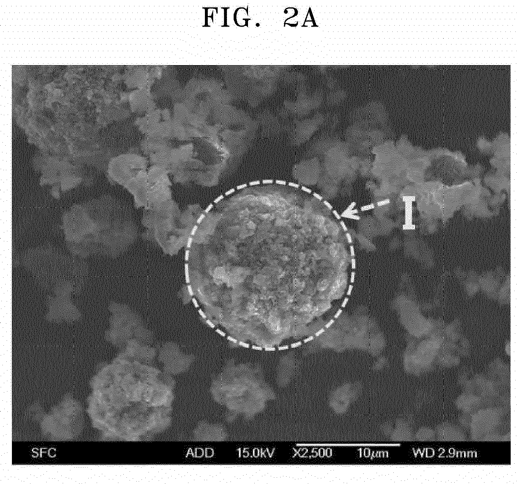

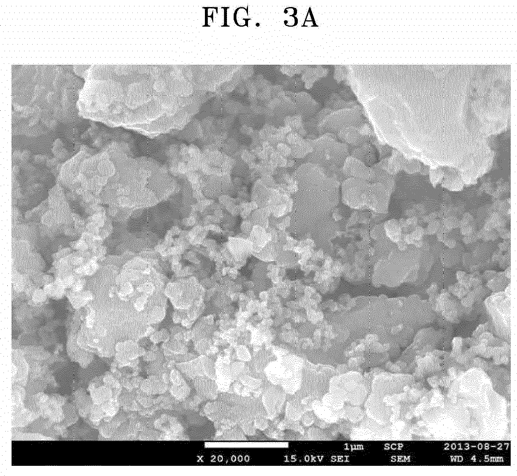

FIG. 2A shows a magnified SEM image (x2,500) of the silicon secondary particle; FIG. 3A is a magnified SEM image (x8) of part I in FIG. 2A; and FIG. 4 is a magnified SEM image (x15,000) of a cross-sectional view of the silicon secondary particle prepared in Example 1 where the silicon secondary particle is cut with focused ion bombardment (FIB). Also, a specific surface area of the silicon secondary particle was about 2.9 m$^2$/g as measured by Brunauer, Emmett, & Teller (BET).

The silicon secondary particle thus prepared was classified using a classifier (TC-15, available from Nisshin Engineering Co.) to obtain a silicon powder with average particle diameter (D50)=9.7 $\mu$m.

Example 2

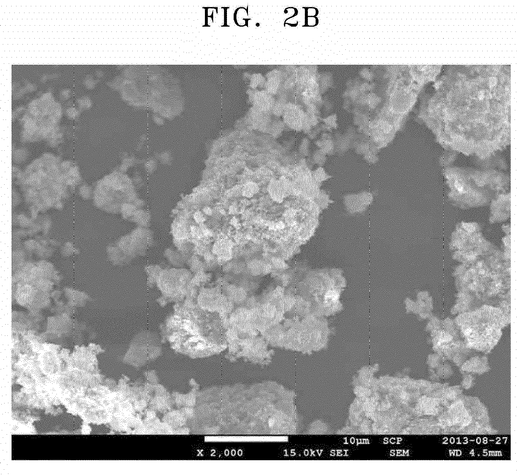

In the stream of argon (Ar) flow, polycrystalline silicon seeds were added to a fluidized bed reactor having an inner temperature at about 700°C, and monosilane was added thereto. In the reactor, amorphous silicon primary particles were formed by thermal decomposition of monosilane, and crystalline silicon primary particles were formed by growth of the seeds, and the amorphous silicon primary particles and the crystalline silicon primary particles were agglomerated as they mixed and grew simultaneously, and thus silicon secondary particles including pores therein were prepared. Here, the pores were open pores in which fine pores are connected to each other. A size of the pores was in a range of about 1 nm to about 10 $\mu$m, and a porosity of the pores was about 22.7%. FIG. 2B shows a magnified SEM (x2,000) image of the silicon secondary particle; and FIG. 3B shows a magnified SEM image (x25,000) of a cross-sectional view of the silicon secondary particle, and the silicon secondary particle is cut with a focused ion bombardment (FIB). Also, a specific surface area of the silicon secondary particle measured by Brunauer, Emmett, & Teller (BET) was about 3 m$^2$/g. The silicon secondary particle thus prepared was classified by using a classifier (TC-15, available from Nisshin Engineering Co.) to obtain a silicon powder with D50=10 $\mu$m.

Example 3

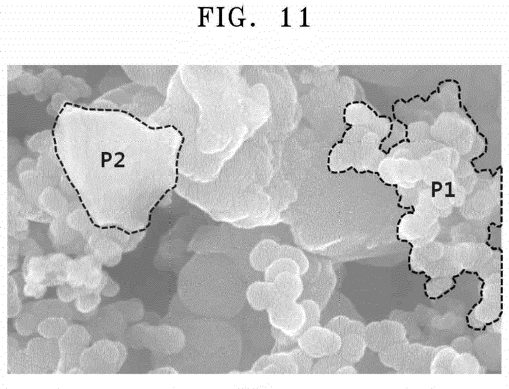

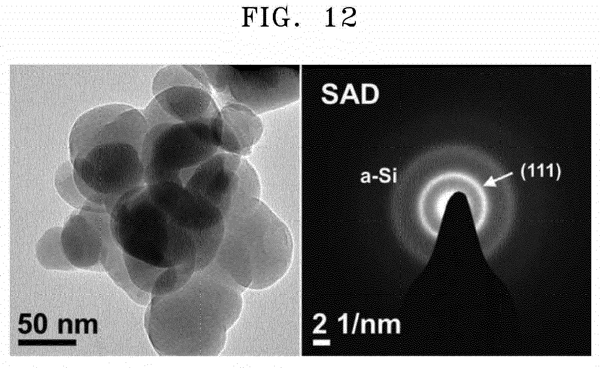

In the stream of argon (Ar) flow, polycrystalline silicon seeds were added to a fluidized bed reactor having an inner temperature at about 800°C, and trichlorosilane (SiHCl$_3$) was added thereto. In the reactor, silicon produced by thermal decomposition of monosilane was precipitated on surfaces of the seeds that were flowing in the reactor, and thus the seeds grew in this manner to form silicon particles having a size of about several tens of nanometers (nm) to about several micrometers ($\mu$m) as side product silicon particles. The side product silicon particles were all formed by thermal decomposition of monosilane regardless of the seeds. The amorphous silicon particles (shown as P1 in FIG. 11) and the silicon particle including both amorphous and crystalline properties (shown as P2 in FIG. 11) were formed, and as P1 and P2 mixed and grew simultaneously, they agglomerated to form silicon secondary particles including pores therein. For example, FIG. 11 is an SEM image of an anode active material prepared in Example 3; FIG. 12 is a magnified transmission electron microscope (TEM) image of part P1 in FIG. 11; and FIG. 13 is a magnified TEM image of part P2 in FIG. 11. Referring to FIG. 13, it may be confirmed that both amorphous and crystalline parts are included in one silicon particle. Also, the specific surface area of the silicon secondary particle measured by Brunauer, Emmett, & Teller (BET) was about 3 m$^2$/g. The silicon secondary particle thus prepared was classified by using a classifier (TC-15, available from Nisshin Engineering Co.) to obtain a silicon powder with D50=10 $\mu$m.

Example 4

In the stream of argon (Ar) flow, monosilane was added to a fluidized bed reactor having an inner temperature at about 800°C, and silicon particles prepared by thermal decomposition of monosilane were classified by using a classifier (TC-15, available from Nisshin Engineering Co.) to obtain a silicon powder with D50=10 $\mu$m.

Example 5

The silicon powder prepared in Example 4 was grounded by using a jet mill (Air Jet M, available from KMtech) to obtain a silicon powder with D50=1.5 $\mu$m.

Comparative Example 1

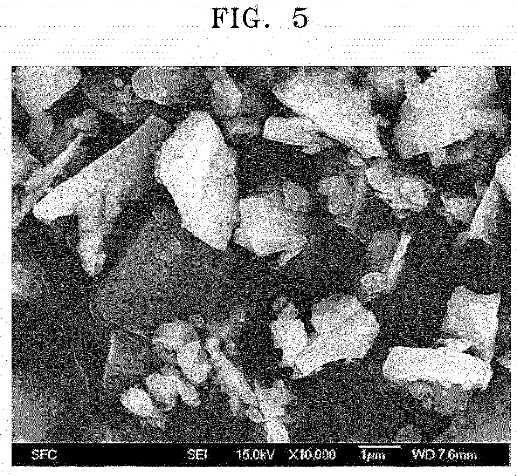

A polycrystalline silicon ingot was placed in a furnace having an inner temperature at about 800°C, and monosilane was added thereto to prepare a polycrystalline silicon having a shape of a rod. The polycrystalline silicon crushed with a jaw crusher was pulverized with a jet mill (AFG-100, available from Hosokawa Micron Group) and classified by using a classifier (TC-15, available from Nisshin Engineering Co.) to obtain a polycrystalline silicon powder with D50=11.4 $\mu$m.
A specific surface area of the polycrystalline silicon particles measured by Brunauer, Emmett, & Teller (BET) was about 0.8 m²/g, and no pore was included in the crystalline structure thereof. FIG. 5 shows an SEM image of the polycrystalline silicon particle.

Comparative Example 2

A polycrystalline silicon ingot was placed in a furnace having an inner temperature at about 800°C, and monosilane was added thereto to prepare a polycrystalline silicon having a shape of a rod. The polycrystalline silicon crushed with a jaw crusher was pulverized with a jet mill (AFG-100, available from Hosokawa Micron Group) and classified by using a classifier (TC-15, available from Nisshin Engineering Co.) to obtain a polycrystalline silicon powder with D50=9.8 $\mu$m. A specific surface area of the polycrystalline silicon particles measured by Brunauer, Emmett, & Teller (BET) was about 0.8 m²/g, and no pore was included in the crystalline structure thereof. An SEM image of the polycrystalline silicon particle appeared the same with the SEM image of Comparative Example 1 shown in FIG. 5.

Comparative Example 3

A powder, Silgrain®, available from Elkem, having an average particle diameter (D50) of about 3 $\mu$m was purchased and used as a silicon powder.

Comparative Example 4

A powder, available from HST, having an average particle diameter (D50) of about 150 nm was purchased and used as a silicon powder.

<Preparation of lithium secondary battery>

Manufacture Example 1

The silicon powders prepared in Example 1 was used as an anode active material. The anode active material and polyimide (PI) as a binder, were mixed at a weight ratio of about 85:15; and N-methyl-2-pyrrolidone, as a solvent, was added thereto and stirred to prepare a slurry having a solids concentration of about 49.7%. The slurry was coated on a copper film having a gap of about 12 $\mu$m using a doctor blade with a thickness of about 30 $\mu$m to prepare an electrode. The electrode was press-molded by using a roller press, dried for 2 hours at 350°C, and punched to a size of about 2 cm², and the resultant was molded as an anode (a molded result). Also, a counter electrode was prepared by using Li as a cathode material, and an electrolyte was a solution including 1.15 M LiPF$_6$ dissolved in a mixture solvent prepared by mixing ethylene carbonate (EC), fluorinated ethylene carbonate (FEC), and diethyl carbonate (DEC) at a volume ratio of about 5:25:70. A polyethylene porous film having a thickness of about 17 $\mu$m was used as a separator, and thus a coin-type lithium secondary battery was prepared.

Comparative Manufacture Example 1

A coin-type lithium secondary battery was prepared in the same manner as in Manufacture Example 1, except that the silicon powder prepared in Comparative Example 1 was used instead of the silicon powder prepared in Example 1.

<Preparation of lithium secondary battery cell for in-situ diatometer>

Manufacture Example 2

The silicon powders prepared in Example 2 was used as an anode active material. The anode active materials prepared in Example 2, a conducting agent, and a binder were mixed at a weight ratio of about 13: 84.5:2.5; and pure water, as a solvent, was added thereto and stirred to prepare a slurry having a solids concentration of about 49.7%. Here, the conducting agent was artificial graphite (AG), and the binder was a mixture of carboxymethyl cellulose (CMC) and styrene-butadiene rubber (SBR) mixed at a weight ratio of 1:1.5. The slurry was coated on a copper film having a thickness of about 12 $\mu$m using a doctor blade with a gap of about 50 $\mu$m to prepare an electrode. The electrode was dried for 20 minutes at 110°C, press-molded by using a roller press, and punched to a size of about 0.5 cm$^2$, and the resultant was molded as an anode (a molded result). A thickness of the anode prepared by using the silicon powder of Example 1 was about 39 $\mu$m, and a thickness of the anode prepared by suing the silicon powder of Comparative Example 2 was about 36 $\mu$m.

Also, a counter electrode was prepared by using Li as a cathode material, and an electrolyte was a solution including 1.15 M LiPF$_6$ dissolved in a mixture solvent prepared by mixing ethylene carbonate (EC), fluorinated ethylene carbonate (FEC), and diethyl carbonate (DEC) at a volume ratio of about 5:25:70. A porous Glass T-frit having a diameter of about 2 centimeters (cm) and a thickness of about 1 cm was used as a separator. Also, the cell was sealed by a rubber O-ring to block contact with oxygen in the outside, and a stainless steel spacer-disk and a titanium membrane having a diameter of about 1 cm and a thickness of about 2.2 millimeters (mm) were used to measure a change in thickness, and thus a lithium secondary battery cell for an in-situ dilatometer was prepared.

Manufacture Example 3

The silicon powders prepared in Example 3 was used as an anode active material. Theanode active materials prepared in Example 3, a conducting agent, and a binder were mixed at a weight ratio of about 13: 84.5:2.5; and pure water, as a solvent, was added thereto and stirred to prepare a slurry having a solids concentration of about 49.7%. Here, the conducting agent was artificial graphite (AG), and the binder was a mixture of carboxymethyl cellulose (CMC) and styrene butadiene rubber (SBR) mixed at a weight ratio of 1:1.5.

The slurry was coated on a copper film having a gap of about 12 $\mu$m by using a doctor blade with a thickness of about 50 $\mu$m to prepare an electrode, the electrode was dried for 20 minutes at 110°C, press-molded by using a roller press, and punched to a size of about 2 cm$^2$, and the resultant was molded as an anode (a molded result). Also, a counter electrode was prepared by using Li as a cathode material, and an electrolyte was a solution including 1.15 M LiPF$_6$ dissolved in a mixture solvent prepared by mixing ethylene carbonate (EC), fluorinated ethylene carbonate (FEC), and diethyl carbonate (DEC) at a volume ratio of about 5:25:70. A polyethylene porous film having a thickness of about 17 $\mu$m was used as a separator, and thus a coin-type lithium secondary battery was prepared.

Comparative Manufacture Example 2

A coin-type lithium secondary battery was prepared in the same manner as in Manufacture Example 2, except that the silicon powder prepared in Comparative Example 2 was used instead of the silicon powder prepared in Example 2. A thickness of the anode prepared by using the silicon powder of Comparative Example 2 was about 36 $\mu$m.

Manufacture Examples 4 and 5 and Comparative Manufacture Examples 3 and 4

The silicon powders prepared in Examples 3 and 4 and Comparative Examples 3 and 4 were each used as an anode active material. Each of the anode active materials prepared in Examples 3 and 4 and Comparative Examples 3 and 4 and polyimide (PI), as a binder, were mixed at a weight ratio of about 85:15; and N-methyl-2-pyrrolidone, as a solvent, was added thereto and stirred to prepare a slurry with a solid concentration of about 49.7%. The slurry was coated on a copper film having a gapof about 12 $\mu$m by using a doctor blade with a thickness of about 30 $\mu$m to prepare an electrode, the electrode was dried for 20 minutes at 110°C, press-molded by using a roller press, and vacuum-dried for 2 hours at 350°C. The resultant was punched to a size of about 2 cm$^2$ and was molded as an anode (a molded result). Also, a counter electrode was prepared by using Li as a cathode material, and an electrolyte was a solution including

1.0 M LiPF$_6$ dissolved in a mixture solvent prepared by mixing ethylene carbonate (EC), fluorinated ethylene carbonate (FEC), and diethyl carbonate (DEC) at a volume ratio of about 5:25:70. A polyethylene porous film having a thickness of about 17 μm was used as a separator, and thus a coin-type lithium secondary battery was prepared.

Evaluation Example 1

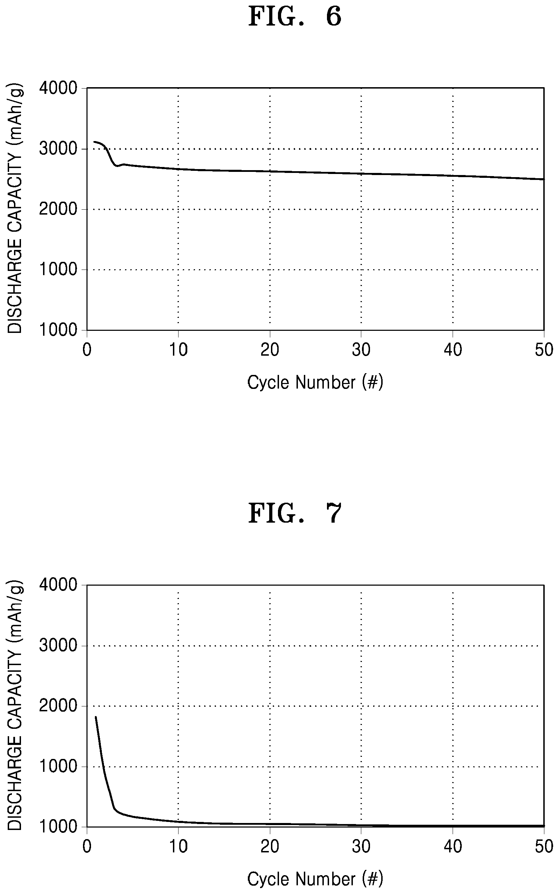

At a temperature of 25°C, the coin-type lithium secondary batteries prepared in Manufacture Example 1 and Comparative Manufacture Example 1 were charged with a charging current of 0.05 C until a voltage was 0.02 volt (V) (a termination voltage) and charged until a current was about 0.01 C at a voltage of 0.02 V. Then, the batteries were discharged with a discharging current of 0.05 C until a voltage of 2 V (a termination voltage), and a capacity per unit weight of the electrode was measured, thereby completing one charging/discharging cycle. Here, charging/discharging capacities, initial efficiencies calculated by Equation 3, and capacity retention ratios calculated by Equation 4 are shown in Table 1. After one charging/discharging cycle, the cycle was repeated 40 times by charging/discharging the batteries with a current of 0.5 C, and capacity retention ratios calculated by Equation 3 are shown in Table 1. Also, graphs showing cycle characteristics of the lithium secondary batteries prepared in Manufacture Example 1 and Comparative Manufacture Example 1 are shown in FIGS. 6 and 7.

[Equation 3]

Initial efficiency (%) = (Discharging capacity of 1$^{st}$ cycle / Charging capacity of 1$^{st}$ cycle)× 100

[Equation 4]

Capacity retention ratio (%) = (Discharging capacity after 40$^{th}$ cycle / Discharging capacity after 1$^{st}$ cycle)× 100

[Table 1]

| | Initial efficiency (%) | Charging capacity (mAh/g) | Discharging capacity (mAh/g) | Capacity retention ratio (%) |
|---|---|---|---|---|
| Manufacture Example 1 | 80.0 | 4075 | 3261 | 90.8 |
| Comparative Manufacture Example 1 | 49.3 | 3635 | 1793 | 11.0 |

Referring to Table 1 and FIGS. 6 and 7, it may be confirmed that the lithium secondary battery prepared in Manufacture Example 1 by using the silicon powder of Example 1 showed improved initial efficiency, charging/discharging capacity, and capacity retention ratio compared to those of the lithium secondary battery prepared in Comparative Manufacture Example 1 by using the silicon powder of Comparative Example 1.

Evaluation Example 2: Charging/discharging characteristics

Charging/discharging capacities and expansion ratios of the lithium secondary batteries prepared in Manufacture Example 2 and Comparative Manufacture Example 2 were evaluated as follows.

1) Charging/discharging capacity (mAh/g)

The cells prepared in Manufacture Example 2 and Comparative Manufacture Example 2 were placed in an in-situ electrochemical dilatometer (ECD-2-DL, available from EL-CELL). Next, at a temperature of 25°C, the cells were charged with a charging current of 0.1 C until a voltage was 0.02 V (a charge termination voltage) and charged until a current density was about 0.01 C at a voltage of 0.02 V, and then discharged with a discharging current of 0.1 C until a voltage of 2 V (a termination voltage), and a capacity per unit weight of the electrode was measured, thereby completing one charging/discharging cycle.

2) Expansion ratio (%)

Charging/discharging capacities of the cells prepared in Manufacture Example 2 and Comparative Manufacture Example 2 were measured by using instruments while voltages and thickness change in the electrodes of the cells were simultaneously measured. Here, a thickness of the anode before the charging process was an initial thickness, and a thickness after the charging process was a final thickness. Expansion ratios of the cells were calculated by Equation 5, and the results are shown in Table 2.

[Equation 5]

Expansion ratio (%) = {(Final thickness - initial thickness)/ initial thickness} * 100

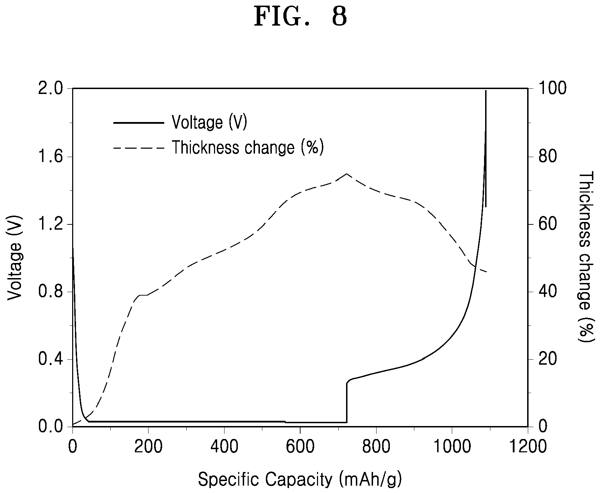

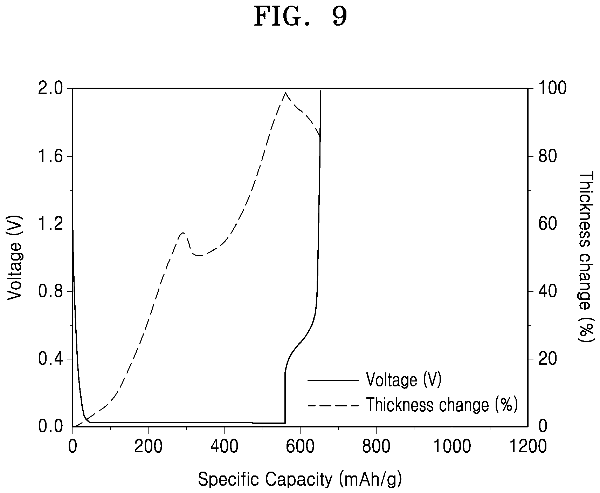

Also, the results of capacity characteristics and anode expansion ratios of the lithium secondary batteries prepared in Manufacture Example 2 and Comparative Manufacture Example 2 measured herein are shown in FIGS. 8 and 9, respectively.

[Table 2]

| | Initial thickness ($\mu$m) | Final thickness ($\mu$m) | Expansion ratio (%) | Charging capacity (mAh/g) | Discharging capacity (mAh/g) |
|---|---|---|---|---|---|
| Manufacture Example 2 | 39 | 68.2 | 74.9 | 724 | 367 |
| Comparative Manufacture Example 2 | 36 | 74.2 | 106.0 | 561 | 93 |

Referring to Table 2 and FIGS. 8 and 9, it may be confirmed that an expansion ratio of the anode prepared by using the silicon powder of Manufacture Example 2 decreased compared to that of the anode prepared by using the silicon powder of Comparative Manufacture Example 2. Also, it may be confirmed that a charging/discharging capacity of the anode prepared by using the silicon powder of Manufacture Example 2 increased compared to that of the anode prepared by using the silicon powder of Comparative Manufacture Example 2.

Evaluation Example 3: XRD test

1) Example 3 and Comparative Example 2

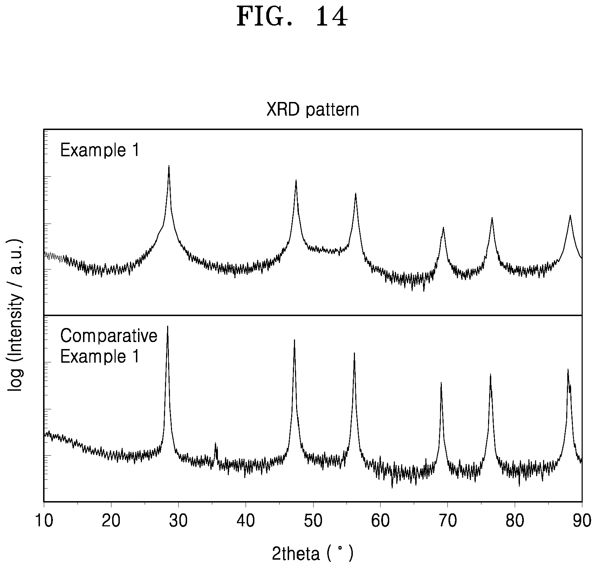

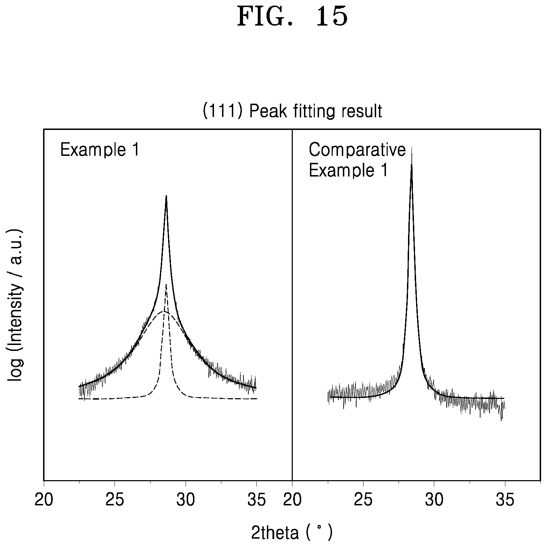

XRD test was performed on the silicon powders prepared in Example 3 and Comparative Example 2, and the results are shown in Table 3 and FIG. 14. Also, the Si (111) peak fitting result in a 2θ (a Bragg's angle) range of about 22.5° to about 35° of the XRD pattern in FIG. 14 is shown in FIG. 15. The conditions for the XRD test included scanning a 2θ range of 10° to about 90° at a rate of about 1° per minute by using CuK-alpha character X-ray (wavelength at 1.541 angstroms (A)).

[Table 3]

| | Sharp peak | | | Broad peak | | |
|---|---|---|---|---|---|---|
| | 2θ (°) | FWHM (°) | Size of crystallite (nm) | 2θ (°) | FWHM (°) | Size of crystallite (nm) |
| Example 3 | 28.58 | 0.24 | 29.7 | 28.12 | 3.44 | 2.3 |
| Comparative Example 2 | 28.39 | 0.13 | 107.0 | - | - | - |

Referring to FIG. 15, unlike the silicon powder of Comparative Example 2, the silicon powder of Example 3 showed 2 peaks in a diffraction angle (2θ) range of about 28.1° to about 28.6°, and a FWHM (difference in width of a diffraction angle (2θ) at half of the maximum value of a diffraction peak) and an average diameter of the crystallites thus obtained are as shown in Table 3. That is, the silicon powder of Example 3 includes two different types of crystallites with different sizes, but the silicon powder of Comparative Example 2 is constituted of crystallites having a similar size.

Evaluation Example 4: Evaluation of charging/discharging characteristics

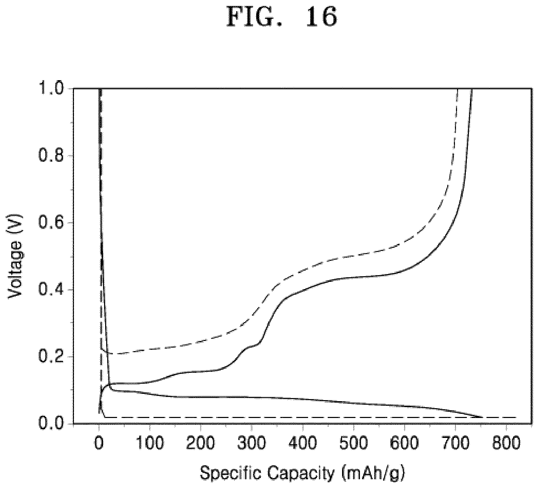

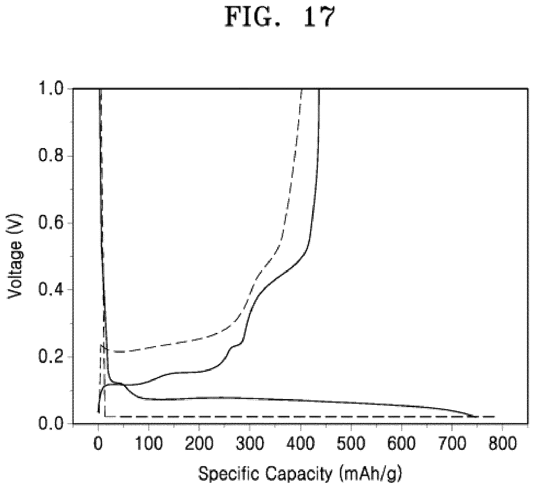

At a temperature of 25°C, the lithium secondary batteries prepared in Manufacture Example 3 and Comparative Manufacture Example 2 were charged with a charging current of 0.05 C until a voltage was 0.02 V (a termination voltage) and charged until a current was about 0.01 C at a voltage of 0.02 V. Then, the batteries were discharged with a discharging current of 0.05 C until a voltage of 2 V (a termination voltage), and a capacity per unit weight of the electrode was measured, thereby completing one charging/discharging cycle. Here, charging/discharging capacities, initial efficiencies calculated by Equation 3, and capacity retention ratios calculated by Equation 4 are shown in Table 4. Charging/discharge curves are shown in FIGS. 16 and 17. After one charging/discharging cycle, the cycle was repeated 40 times by charging/discharging the batteries with a current of 0.5 C, and capacity retention ratios are shown in Table 4.

[Table 4]

| | Initial thickness ($\mu$m) | Charging capacity (mAh/g) | Discharging capacity (mAh/g) | Capacity retention ratio (%) |
|---|---|---|---|---|
| Manufacture Example 3 | 91 | 805 | 731 | 42 |
| Comparative Manufacture Example 2 | 52 | 779 | 408 | 0 |

Referring to Table 4, it may be confirmed that an initial efficiency, charging/discharging capacity, and capacity retention ratio of the lithium secondary battery prepared in Manufacture Example 2 improved compared to those of the lithium secondary battery prepared in Comparative Manufacture Example 2.

Evaluation Example 5: XPS analysis of silicon powder

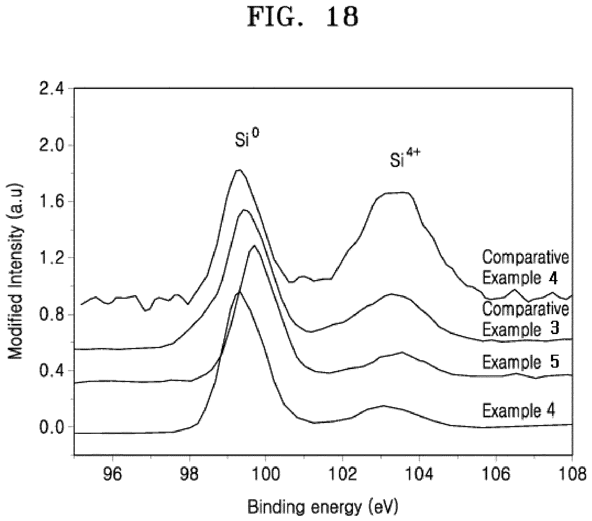

In order to measure oxygen contents, the silicon powders prepared in Examples 4 and 5 and Comparative Examples 3 and 4 were finely ground by using a mortar, and then the resultant product was processed to prepare a pellet having a diameter of 10 mm and a height of 1 mm, and an XPS analysis was performed thereon. Normalized ratios of the numbers of atoms of silicon (Si) and oxygen (O) in the silicon particle obtained by the analysis are shown in Table 5, and the XPS spectrum is shown in FIG. 18. The ratios of the numbers of atoms silicon (Si) and oxygen (O) each refers to a weight ratio of the number of atoms of Si or O with respect to the total number of atoms of Si and O. The normalized atomic ratio of silicon (Si) with respect to oxygen (O) is shown as Si/O.

Evaluation Example 6: Initial efficiency and lifespan characteristics

The coin cells prepared in Manufacture Examples 4 and 5 and Comparative Manufacture Examples 3 and 4 were maintained at a temperature of 25°C for 24 hours, and then initial efficiency and lifespan characteristics were evaluated by using a lithium secondary battery charger/discharger (TOSCAT-3600, available from Toyo-System Co., LTD). In a first cycle, the batteries were charged with a charging current of 0.05 C until a voltage of 0.02 V (a termination voltage), charged until a current density was 0.01 C at a voltage of 0.02 V, and discharged with a discharging current of 0.05 C until a voltage of 1.5 V (a termination voltage), and then a capacity per unit weight was measured, thereby completing the first cycle of charging/discharging. After one charging/discharging cycle, the cycle was repeated 40 times by charging/discharging the batteries with a current of 0.5 C, and initial efficiencies and capacity retention ratios calculated by Equations 3 and 4, respectively, are shown in Table 5.

[Table 5]

| | Si+O Normalized Atomic ratio | | Si/O | P1/P2 area ratio | 1st cycle | | | |
|---|---|---|---|---|---|---|---|---|
| | Si (wt%) | O (wt%) | | | Discharging Capacity (mAh/g) | Charging capacity (mAh/g) | Initial efficiency (%) | Capacity retention ratio (%) |
| Manufacture Example 4 | 64.4 | 35.6 | 1.81 | 3.38 | 3498 | 3891 | 90 | 89.4 |

(continued)

| | Si+O Normalized Atomic ratio | | Si/O | P1/P2 area ratio | 1st cycle | | | |
|---|---|---|---|---|---|---|---|---|
| | Si (wt%) | O (wt%) | | | Discharging Capacity (mAh/g) | Charging capacity (mAh/g) | Initial efficiency (%) | Capacity retention ratio (%) |
| Manufacture Example 5 | 61.0 | 39.0 | 1.56 | 3.63 | 3558 | 3847 | 90 | 88.4 |
| Comparative Manufacture Example 3 | 50.4 | 49.6 | 0.98 | 0.55 | 3129 | 3877 | 81 | 89.5 |
| Comparative Manufacture Example 4 | 59.4 | 40.6 | 0.68 | 0.67 | 712 | 2203 | 32 | 65.7 |

Referring to Table 5, it may be confirmed that a charging/discharging capacity and an initial efficiency of the lithium secondary batteries prepared in Manufacture Examples 4 and 5 with high atomic ratios of silicon atoms to oxygen atoms, compared to those of the lithium secondary batteries prepared in Comparative Manufacture Examples 3 and 4. Also, it may be confirmed that lifespan characteristics of the lithium secondary batteries prepared in Manufacture Examples 4 and 5 improved as well compared to those of the lithium secondary batteries prepared in Comparative Manufacture Examples 4.

According to one or more embodiments, pores included in a silicon secondary particle and specifically, in a shell part of the silicon secondary particle, may compensate for volume expansion of silicon that may occur during a charging process, and thus a volume change of the silicon secondary particle after repeated charging/discharging process may be reduced.

According to one or more embodiments, provided is a silicon particle including an amorphous part and a crystalline part that are combined in one particle, and thus destruction of the silicon particle caused by the volume expansion during a charging process may be minimized. Also, since the pores between silicon primary particles may serve as diffusion pathways of lithium ions, reactivity and mobility of silicon and lithium at this region may increase, and thus a charging/discharging capacity of a lithium battery including the silicon particle may improve.

Also, an anode active material including a silicon particle have a higher number of silicon (Si) atoms than oxygen (O)atoms, that is, the silicon particle include the least amount of $SiO_2$ formed by surface oxidation. Also, the silicon particle including an amorphous part and a crystalline part combined together in one particle may minimize destruction of the silicon particle caused by the volume expansion.

Therefore, when an anode for a lithium secondary battery is prepared using the anode active material according to one or more embodiments, decrease in initial efficiency, modification of an anode according to charging/discharging of the battery, and deterioration of battery characteristics in this regard may be reduced, and cycle characteristics and lifespan characteristics of the battery may improve.

It should be understood that exemplary embodiments described herein should be considered in a descriptive sense only and not for purposes of limitation. Descriptions of features or aspects within each exemplary embodiment should typically be considered as available for other similar features or aspects in other exemplary embodiments.

While one or more exemplary embodiments have been described with reference to the figures, it will be understood by those of ordinary skill in the art that various changes in form and details may be made therein without departing from the scope as defined by the following claims.

## Claims

1. An anode active material for a lithium secondary battery comprising a silicon secondary particle, wherein the silicon secondary particle comprises an agglomerate of an amorphous silicon primary particle and a crystalline silicon primary particle, and
wherein the silicon secondary particle comprises open pores, a size of the open pores is in a range of 1 nm to 10 $\mu$m, and the open pores in the silicon secondary particle are 3-dimensionally connected to each other,
wherein the silicon secondary particle further comprises a silicon primary particle having an average particle diameter (D50) in a range of 1μm to 10 μm,
the silicon secondary particle is an agglomerate of the silicon primary particle having a size of 50 nm to 3 μm,
wherein the silicon secondary particle comprises:
a core part comprising an agglomerate of silicon primary particles having an average particle diameter (D50) in a range of 1 μm to 10 μm; and
a porous shell part comprising an agglomerate of silicon primary particles having an average particle diameter (D50) in a range of 50 nm to 3 μm on a surface of the core part, and
wherein the core part comprises i) an agglomerate of crystalline silicon primary particles or ii) an agglomerate of amorphous silicon primary particles and crystalline silicon primary particles.

2. The anode active material of claim 1, wherein an average particle diameter (D50) of the amorphous silicon primary particle and an average particle diameter (D50) of the crystalline silicon primary particle are in a range of 10 nm to 10 μm.

3. The anode active material of claim 1 or claim 2:

   wherein the silicon secondary particle further comprises at least one type of pores selected from closed pores and semi-closed pores; and/or
   wherein a specific surface area of the silicon secondary particle is in a range of 2 m²/g to 100 m²/g; and/or
   wherein a porosity of the silicon secondary particle is in a range of 5% to 80%; and/or
   wherein an average particle diameter (D50) of the silicon secondary particle is in a range of 0.1 μm to 15 μm..

4. The anode active material of any preceding claim, wherein the silicon secondary particle is an agglomerate of the amorphous silicon primary particle and the crystalline silicon primary particle, wherein the agglomerate is a decomposition product of a silane gas in an inert gas atmosphere.

5. The anode active material of any of claims 1 to 4, wherein the shell part comprises the agglomerate of the amorphous silicon primary particles and the crystalline silicon primary particles.

6. The anode active material of any of claims 1 to 5, wherein the core part occupies 60% of a distance from the center of the silicon secondary particle to a surface of the silicon secondary particle and the shell part occupies the remaining portion of the distance, and a porosity of the shell part is at least 1.7 times greater than a porosity of the core part, preferably wherein the porosity of the core part is in a range greater than 0% to 10% and the porosity of the shell part is 20% to 90%.

7. The anode active material of any of claims 1 to 6:

   wherein an amount of the core part is in a range of 10 wt% to 90 wt% based on a total weight of the silicon secondary particle; and/or
   wherein an average particle diameter (D50) of the silicon secondary particle is in a range of 1.5 μm to 15 μm; and/or
   wherein a specific surface area of the silicon secondary particle is in a range of 2 m²/g to 100 m²/g; and/or
   wherein the number of silicon atoms is higher than the number of oxygen atoms in the silicon primary particle and silicon secondary particle.

8. The anode active material of any preceding claim, wherein the crystalline silicon primary particle comprises crystallites having an average diameter in a range of 1 nm to 100 nm,
preferably wherein the crystalline primary particle comprises first crystallites having an average diameter in a range of 1 nm to 5 nm and second crystal crystallites having an average diameter in a range of 10 nm to 30 nm.

9. The anode active material of any preceding claim:

   wherein the silicon secondary particle has two to five diffraction peaks within a diffraction angle 2θ of 28.1° to 28.6° based on X-ray diffraction analysis; and/or
   wherein the silicon secondary particle has a diffraction peak having a full width at half of maximum (FWHM) in a range of 3° to 5° within a diffraction angle 2θ of 28.1° to 28.6° based on X-ray diffraction analysis; and/or
   wherein an average particle diameter (D50) of the silicon secondary particle is in a range of 50 nm to 10 μm.

**10.** The anode active material of any preceding claim, wherein a number of silicon atoms is greater than a number of oxygen atoms in the silicon primary particle and silicon secondary particle.

**11.** The anode active material of claim 10:

wherein an average particle diameter (D50) of the silicon primary particle and silicon secondary particle is in a range of 20 nm to 20 $\mu$m; and/or

wherein the silicon primary particle and silicon secondary particle is a decomposition product of a silane gas in an inert gas atmosphere.

**12.** The anode active material of any preceding claim:

wherein an atomic ratio of silicon atoms to oxygen atoms (Si/O) measured from a surface of the silicon primary particle and silicon secondary particle to a depth of 10 nm to 15 nm is in a range of 1 to 4, as measured by X-ray photoelectron spectroscopy; and/or

wherein an area ratio (P1/P2) of a Si peak (P1) having a binding energy in a range of 98 eV to 102 eV to a Si$^{4+}$ peak (P2) having a binding energy in a range of 102 eV to 105 eV is in a range of 1 to 19, as measured by X-ray photoelectron spectroscopy.

**13.** A lithium secondary battery comprising the anode active material of any preceding claim.

**Patentansprüche**

**1.** Aktives Anodenmaterial für eine Lithiumsekundärbatterie, umfassend ein Silizium-Sekundärpartikel, wobei das Silizium-Sekundärpartikel ein Agglomerat eines amorphen Silizium-Primärpartikels und eines kristallinen Silizium-Primärpartikels umfasst, und

wobei das Silizium-Sekundärpartikel offene Poren umfasst, wobei eine Größe der offenen Poren in einem Bereich von 1 nm bis 10 $\mu$m liegt, und die offenen Poren in dem Silizium-Sekundärpartikel 3-dimensional miteinander verbunden sind,

wobei das Silizium-Sekundärpartikel ferner ein Silizium-Primärpartikel umfasst, das einen mittleren Partikeldurchmesser (D50) in einem Bereich von 1 $\mu$m bis 10 $\mu$m aufweist,

wobei das Silizium-Sekundärpartikel ein Agglomerat des Silizium-Primärpartikels ist, das eine Größe von 50 nm bis 3 $\mu$m aufweist,

wobei das Silizium-Sekundärpartikel Folgendes umfasst:

einen Kernteil, umfassend ein Agglomerat von Silizium-Primärpartikeln, die einen mittleren Partikeldurchmesser (D50) in einem Bereich von 1 $\mu$m bis 10 $\mu$m aufweisen; und

einen porösen Hüllenteil, umfassend ein Agglomerat von Silizium-Primärpartikeln, die einen mittleren Partikeldurchmesser (D50) in einem Bereich von 50 nm bis 3 $\mu$m auf einer Oberfläche des Kernteils aufweisen, und

wobei der Kernteil i) ein Agglomerat von kristallinen Silizium-Primärpartikeln oder ii) ein Agglomerat von amorphen Silizium-Primärpartikeln und kristalline Silizium-Primärpartikel umfasst.

**2.** Aktives Anodenmaterial nach Anspruch 1, wobei ein mittlerer Partikeldurchmesser (D50) des amorphen Silizium-Primärpartikels und ein mittlerer Partikeldurchmesser (D50) des kristallinen Silizium-Primärpartikels in einem Bereich von 10 nm bis 10 $\mu$m liegen.

**3.** Aktives Anodenmaterial nach Anspruch 1 oder Anspruch 2:

wobei der Silizium-Sekundärpartikel ferner zumindest einen Poren-Typ ausgewählt aus geschlossenen Poren und halbgeschlossenen Poren umfasst; und/oder

wobei ein spezifischer Oberflächenbereich des Silizium-Sekundärpartikels in einem Bereich von 2 m$^2$/g bis 100 m$^2$/g liegt; und/oder

wobei eine Porosität des Silizium-Sekundärpartikels in einem Bereich von 5 % bis 80 % liegt;

und/oder

wobei ein mittlerer Partikeldurchmesser (D50) des Silizium-Sekundärpartikels in einem Bereich von 0.1 $\mu$m bis

15 μm liegt.

**4.** Aktives Anodenmaterial nach einem der vorhergehenden Ansprüche, wobei das Silizium-Sekundärpartikel ein Agglomerat des amorphen Silizium-Primärpartikels und des kristallinen Silizium-Primärpartikels ist, wobei das Agglomerat ein Zersetzungsprodukt eines Silan-Gases in einer Inertgasatmosphäre ist.

**5.** Aktives Anodenmaterial nach einem der Ansprüche 1 bis 4, wobei der Hüllenteil das Agglomerat der amorphen Silizium-Primärpartikel und der kristallinen Silizium-Primärpartikel umfasst.

**6.** Aktives Anodenmaterial nach einem der Ansprüche 1 bis 5, wobei der Kernteil 60 % einer Entfernung von der Mitte des Silizium-Sekundärpartikels zu einer Oberfläche des Silizium-Sekundärpartikels einnimmt und der Hüllenteil das restliche Teilstück der Entfernung einnimmt, und eine Porosität des Hüllenteils zumindest 1,7-mal größer ist als eine Porosität des Kernteils,
wobei die Porosität des Kernteils bevorzugt in einem Bereich liegt, der größer als 0 % bis 10 % ist und die Porosität des Hüllenteils 20 % bis 90 % beträgt.

**7.** Aktives Anodenmaterial nach einem der Ansprüche 1 bis 6:

wobei eine Menge des Kernteils in einem Bereich von 10 Gew.-% bis 90 Gew.-% liegt, basierend auf einem Gesamtgewicht des Silizium-Sekundärpartikels; und/oder
wobei ein mittlerer Partikeldurchmesser (D50) des Silizium-Sekundärpartikels in einem Bereich von 1,5 μm bis 15 μm liegt; und/oder
wobei ein spezifischer Oberflächenbereich des Silizium-Sekundärpartikels in einem Bereich von 2 m$^2$/g bis 100 m$^2$/g liegt; und/oder
wobei die Anzahl von Siliziumatomen höher ist als die Anzahl von Sauerstoffatomen in dem Silizium-Primärpartikel und Silizium-Sekundärpartikel.

**8.** Aktives Anodenmaterial nach einem der vorhergehenden Ansprüche, wobei das kristalline Silizium-Primärpartikel Kristallite umfasst, die einen mittleren Durchmesser in einem Bereich von 1 nm bis 100 nm aufweisen,
wobei das kristalline Silizium-Primärpartikel bevorzugt erste Kristallite, die einen mittleren Durchmesser in einem Bereich von 1 nm bis 5 nm aufweisen, und zweite Kristallite umfasst, die einen mittleren Durchmesser in einem Bereich von 10 nm bis 30 nm aufweisen.

**9.** Aktives Anodenmaterial nach einem der vorhergehenden Ansprüche:

wobei das Silizium-Sekundärpartikel zwei bis fünf Beugungspeaks innerhalb eines Beugungswinkels 2θ von 28.1° bis 28.6° aufweist, basierend auf Röntgenbeugungsanalyse; und/oder
wobei das Silizium-Sekundärpartikel einen Beugungspeak aufweist, der eine volle Breite bei halber Höhe (FWHM) in einem Bereich von 3° bis 5° innerhalb eines Beugungswinkels 2θ von 28.1° bis 28.6° aufweist, basierend auf Röntgenbeugungsanalyse; und/oder
wobei ein mittlerer Partikeldurchmesser (D50) des Silizium-Sekundärpartikels in einem Bereich von 50 nm bis 10 μm liegt.

**10.** Aktives Anodenmaterial nach einem der vorhergehenden Ansprüche, wobei eine Anzahl von Siliziumatomen größer ist als eine Anzahl von Sauerstoffatomen in dem Silizium-Primärpartikel und Silizium-Sekundärpartikel.

**11.** Aktives Anodenmaterial nach Anspruch 10:

wobei ein mittlerer Partikeldurchmesser (D50) des Silizium-Primärpartikels und des Silizium-Sekundärpartikels in einem Bereich von 20 nm bis 20 μm liegt, und/oder
wobei das Silizium-Primärpartikel und Silizium-Sekundärpartikel ein Zersetzungsprodukt eines Silan-Gases in einer Inertgasatmosphäre ist.

**12.** Aktives Anodenmaterial nach einem der vorhergehenden Ansprüche:

wobei ein Atomverhältnis von Siliziumatomen zu Sauerstoffatomen (Si/O), gemessen auf einer Oberfläche des Silizium-Primärpartikels und des Silizium-Sekundärpartikels zu einer Tiefe von 10 nm bis 15 nm in einem Bereich von 1 bis 4 liegt, gemessen durch Röntgen-Photoelektronenspektroskopie; und/oder

wobei ein Bereichsverhältnis (P1/P2) eines Si-Peaks (P1), aufweisend eine Bindungsenergie in einem Bereich von 98 eV bis 102 eV, zu einem $Si^{4+}$-Peak (P2), aufweisend eine Bindungsenergie in einem Bereich von 102 eV bis 105 eV, in einem Bereich von 1 bis 19 liegt, gemessen durch Röntgen-Photoelektronenspektroskopie.

**13.** Lithiumsekundärbatterie, umfassend das aktive Anodenmaterial nach einem der vorhergehenden Ansprüche.

**Revendications**

**1.** Matériau actif d'anode pour une pile secondaire au lithium comprenant une particule secondaire de silicium, la particule secondaire de silicium comprenant un aggloméré d'une particule primaire de silicium amorphe et d'une particule primaire de silicium cristallin, et
la particule secondaire de silicium comprenant des pores ouverts, une taille des pores ouverts étant comprise dans la plage 1 nm à 10 $\mu$m, et les pores ouverts dans la particule secondaire de silicium étant raccordés tridimensionnellement entre eux,
la particule secondaire de silicium comprenant en outre une particule primaire de silicium ayant un diamètre de particule moyen (D50) compris dans la plage 1 $\mu$m to 10 $\mu$m, et la particule secondaire de silicium étant un aggloméré d'une particule primaire de silicium dont la taille est comprise entre 50 nm et 3 $\mu$m,
la particule secondaire de silicium comprenant :

un noyau comprenant un aggloméré de particules primaires de silicium ayant un diamètre de particule moyen (D50) compris dans la plage 1 $\mu$m to 10 $\mu$m ; et
une enveloppe poreuse comprenant un aggloméré de particules primaires de silicium ayant un diamètre de particule moyen (D50) compris dans la plage 50 nm à 3 $\mu$m sur une surface du noyau, et
l'enveloppe comprenant i) un aggloméré de particules primaires de silicium cristallin ou ii) un aggloméré de particules primaires de silicium amorphe et un aggloméré de particules primaires de silicium cristallin.

**2.** Matériau actif d'anode selon la revendication 1, un diamètre de particule moyen (D50) de la particule primaire de silicium amorphe et un diamètre de particule moyen (D50) de la particule primaire de silicium cristallin étant compris dans une plage allant de 10 nm à 10 $\mu$m.

**3.** Matériau actif d'anode selon la revendication 1 ou la revendication 2 :

la particule secondaire de silicium comprenant en outre au moins un type de pores sélectionné parmi des pores fermés et des pores semi-fermés ; et/ou
une zone à surface spécifique de la particule secondaire de silicium étant comprise dans une plage allant de 2 $m^2$/g à 100 $m^2$/g ; et/ou
une porosité de la particule secondaire de silicium étant comprise dans une plage allant de 5% à 80% ; et/ou

un diamètre de particule moyen (D50) de la particule secondaire de silicium étant compris dans une plage allant de 0,1 $\mu$m à 15 $\mu$m.

**4.** Matériau actif d'anode selon une quelconque des revendications précédentes, la particule secondaire de silicium étant un aggloméré de la particule primaire de silicium amorphe et un aggloméré de la particule primaire de silicium cristallin, l'aggloméré étant un produit de la décomposition de gaz silane dans une atmosphère de gaz inerte.

**5.** Matériau actif d'anode selon une quelconque des revendications 1 à 4, l'enveloppe comprenant l'aggloméré de particules primaires de silicium amorphe et des particules primaires de silicium cristallin.

**6.** Matériau actif d'anode selon une quelconque des revendications 1 à 5, le noyau occupant 60% d'une distance séparant le centre de la particule secondaire de silicium d'une surface de la particule secondaire de silicium, et l'enveloppe occupant la partie restante de la distance, et une porosité de l'enveloppe étant supérieure d'au moins 1,7 fois la porosité du noyau,
de préférence la porosité du noyau se trouvant dans une plage supérieure de 0% à 10% et la porosité de l'enveloppe de 20% à 90%.

**7.** Matériau actif d'anode selon une quelconque des revendications 1 à 6 :

une quantité du noyau étant compris dans une plage allant de 10% en poids à 90% en poids sur la base du poids total de la particule secondaire de silicium ; et/ou

un diamètre de particule moyen (D50) de la particule secondaire de silicium étant compris dans une plage allant de 1,5 μm à 15 μm ; et/ou

une zone à surface spécifique de la particule secondaire de silicium étant comprise dans une plage allant de 2 m²/g à 100 m²/g ; et/ou

le nombre d'atomes de silicium étant supérieur au nombre d'atomes d'oxygène dans la particule primaire de silicium et la particule secondaire de silicium.

8. Matériau actif d'anode selon une quelconque des revendications précédentes, la particule primaire de silicium cristallin comprenant des cristallites présentant un diamètre moyen dans la plage 1 nm à 100 nm, de préférence la particule primaire cristalline comprenant des premiers cristallites dont le diamètre moyen mesure de 1 nm à 5 nm et des deuxièmes cristallites de cristal dont le diamètre moyen mesure de 10 nm à 30 nm.

9. Matériau actif d'anode selon une quelconque des revendications précédentes :

la particule secondaire de silicium présentant deux à cinq pics de diffraction dans un angle de diffraction 2θ de 28,1° à 28,6° sur la base d'une analyse de diffraction des rayons X ; et/ou

la particule secondaire de silicium présentant un pic de diffraction ayant une largeur intégrale à la moitié du maximum (FWHM) dans une plage allant de 3° à 5° dans un angle de diffraction 2θ de 28,1° à 28,6° sur la base d'une analyse de diffraction des rayons X ; et/ou

un diamètre de particule moyen (D50) de la particule secondaire de silicium étant compris dans une plage allant de 50 nm à 10 μm.

10. Matériau actif d'anode selon une quelconque des revendications précédentes, un nombre d'atomes de silicium étant supérieur au nombre d'atomes d'oxygène dans la particule primaire de silicium et la particule secondaire de silicium.

11. Matériau actif d'anode selon la revendication 10 :

un diamètre de particule moyen (D50) de la particule primaire de silicium et de la particule secondaire de silicium étant compris dans une plage allant de 20 nm à 20 μm ; et/ou

la particule primaire de silicium et de la particule secondaire de silicium étant un produit de la décomposition de gaz de silane dans une atmosphère de gaz inerte.

12. Matériau actif d'anode selon une quelconque des revendications précédentes :

un rapport atomique d'atomes de silicium (Si/O) mesuré d'une surface de la particule primaire de silicium et de la particule secondaire de silicium jusqu'à une profondeur de 10 nm à 15 nm étant compris dans une plage allant de 1 à 4, mesurée par spectroscopie photo-électronique des rayons X ; et/ou

un rapport de surface (P1/P2) d'un pic Si (P1) possédant une énergie de liaison dans une plage 98 eV à 102 eV jusqu'à un pic Si⁴⁺ (P2) possédant une énergie de liaison dans une plage 102 eV à 105 eV étant dans une plage de 1 à 19 mesurée par spectroscopie photo-électronique des rayons X.

13. Pile secondaire au lithium comprenant le matériau actif d'anode selon une quelconque des revendications précédentes.

# FIG. 1A

FIG. 1B

FIG. 1C

## FIG. 2A

# FIG. 2B

FIG. 3A

FIG. 3B

FIG. 4

FIG. 5

## FIG. 6

## FIG. 7

# FIG. 8

# FIG. 9

# FIG. 10

Crystal
Metal Si
→ Charge →
a-Li$_x$Si
→ Destruction During Charge →

FIG. 11

FIG. 12

## FIG. 13

# FIG. 14

XRD pattern

# FIG. 15

(111) Peak fitting result

FIG. 16

FIG. 17

# FIG. 18

**EP 3 026 736 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015005648 A1
- US 20100297502 A1
- US 20050233213 A1